# EUROPÄISCHE PATENTSCHRIFT

(11) **EP 3 638 920 B1**
(45) Veröffentlichungstag und Bekanntmachung des Hinweises auf die Patenterteilung: **19.07.2023**
(21) Anmeldenummer: 18733524.5
(22) Anmeldetag: 13.06.2018
(51) Int. Cl.: F16F 15/027, F16F 15/023, F16F 9/04, F16F 7/10, F16F 7/00, F02G 1/043, F16F 9/10, F16F 15/04, F23D 14/66, F23L 15/02, F24C 3/08, F23D 14/04

(54) **VORRICHTUNG ZUR BIDIREKTIONALEN LAGERUNG EINER ERSTEN STRUKTUR RELATIV ZUR EINER ZWEITEN STRUKTUR**
DEVICE FOR BIDIRECTIONAL ARRANGEMENT OF A FIRST STRUCTURE IN REGARDS TO A SECOND STRUCTURE
DISPOSITIF POUR DISPOSITION BIDIRECTIONELLE D'UNE PREMIÈRE STRUCTURE PAR RAPPORT À UNE SECONDE STRUCTURE

(30) Priorität: 16.06.2017 DE 102017113303; 17.11.2017 DE 102017220578
(43) Veröffentlichungstag der Anmeldung: 22.04.2020
(73) Patentinhaber: Fraunhofer-Gesellschaft zur Förderung der angewandten Forschung e.V., 80686 München (DE)
(72) Erfinder: KAAL, William, 64289 Darmstadt (DE); HEROLD, Sven, 64823 Gro -Umstadt (DE); HANSMANN, Jan, 64287 Darmstadt (DE)
(74) Vertreter: Rösler, Uwe
(86) Internationale Anmeldenummer: PCT/EP2018/065594
(87) Internationale Veröffentlichungsnummer: WO 2018/229096

(56) Entgegenhaltungen:
- DE-A1-102008 015 106
- JP-A- H0 571 574
- US-A- 3 101 937
- US-A- 5 558 191
- US-A- 5 730 429
- US-A- 5 775 472

## Beschreibung

### Technisches Gebiet

Die Erfindung bezieht sich auf eine Vorrichtung zur bidirektionalen Lagerung einer ersten Struktur relativ zur einer zweiten Struktur längs wenigstens einer ersten Raumachse, mit einem beide Strukturen miteinander verbindenden bidirektional auslenkbaren Lager.

### Stand der Technik

Lagerungen der vorstehenden Gattung werden zumeist als ein- oder mehraxiale Lager zum Abfangen statischer Gewichts- und/oder dynamischer Prozesskräfte eingesetzt.

Üblicherweise kommen zur mehraxialen Lagerung einer Struktur gegenüber einer anderen Struktur in Reihe geschaltete Führungen, bspw. in Form von Linearführungen, oder Festkörpergelenke, bspw. in Form von Blattfedern o.ä., zum Einsatz. Je nach Anforderungen und Einsatzweck können derartige Lager mittels aktive Ansteuerung als Aktoren, bspw. in Form von uniaxialen Stellweg-Aktoren@ eingesetzt werden. Typischerweise dienen hierzu Linearmotoren oder Hydraulikzylinderanordnungen als Aktoren.

Bekannt sind ferner Hydraulik-Aufbauten zur mehraxialen Lagerung einer oder mehrerer Strukturen, die über jeweils einaxiale Kolbenanordnungen, KugelgelenkVerbindungen und typischerweise lange mechanische Anbindungen bspw. in Form langer Kolbenstangen, mit einer abstützenden Struktur verbunden sind. Die Kugelgelenke sowie der Einsatz langer Kolbenstangen dienen der Entkopplung der den einzelnen Kolbenanordnungen zugeordneten Raumachsen. Die räumlichen Abmessungen derartiger Hydraulik-Aufbauten sind naturgemäß deutlich größer als die uniaxialen Stellwege der einzelnen Kolbenanordnungen, da die an den Kugelgelenkverbindungen auftretenden Drehbewegungen möglichst klein bleiben müssen.

Zu Lagerzwecken geht aus der Druckschrift EP 1 843 060 A1 ein mit Luft befüllbares Wandlerelement in Form einer Luftfeder hervor, die eine aus Elastomermaterial gefertigte Fluidkammerwand mit einer zusätzlichen aus Textilstrukturen aufgebaute Schutzschicht vorsieht. In Abhängigkeit des Fülldruckes ist die Federsteifigkeit individuell einstellbar, die nicht nur in einer der Luftfeder zugeordneten Längsrichtung wirkt, die der Hauptwirkrichtung der Luftfeder entspricht, sondern auch in deren Querrichtung verformbar ist.

In der Druckschrift EP 1 566 543 A1 ist eine Elastomerlagerung mit einer regulierbaren Steifigkeit beschrieben, die einen zwischen einer starren Deckel- und Bodenplatte angeordnetes Elastomerelement aufweist, wobei ein Fluidfüllstutzen die Deckelplatte durchragt und eine Fluidbefüllung eines zwischen dem Elastomerkörper und der Deckelplatte vorgesehenen Füllvolumens ermöglicht. Im Wege der Fluidbefüllung lässt sich die Steifigkeit der Elastomerlagerung in einem vorgegebenen Rahmen individuell einstellen. Das bekannte Elastomerelement dient für einen Einsatz als Lagerpunkt in Zwei- oder Mehrpunktlagerungen vorzugsweise für Windkraftanlagen. Ein Lagerpunkt umfasst in diesem Fall zwei derartige Elastomerelemente, die das zu lagernde Maschinenteil in einem Punkt halten und längs der Vertikalen jeweils ober- und unterhalb des Maschinenteils angeordnet sind. Zum Zwecke einer hydraulisch geregelten Zweipunktlagerung sind an zwei getrennten Lagerpunkten je zwei Elastomerelemente in der vorstehenden Weise angeordnet.

Die Druckschrift DE 20 2010 009 199 U1 beschreibt eine einstellbare Schwingungstilgervorrichtung für ein Kamerarobotersystem, umfassend einen Roboterarm-seitigen Montageteil sowie einen Tilgermassenteil, vorzugsweise in Form der Kamera, die über einen Federdämpfungsteil mit dem Montageteil verbunden ist. Das Federdämpfungsteil verfügt jeweils über in drei Raumrichtungen gesondert einstellbare, lineare Federdämpfungsvorrichtungen, die in Form von jeweils uniaxialen Kolben-Zylinder Dämpfungseinheiten ausgebildet sind.

Die Druckschrift DE 10 2008 015 106 A1 offenbart eine Dämpfungsvorrichtung in Form eines Erdbebendämpfers, der einen hohlen Kugelkörper umfasst, der mit einer Dämpfungsflüssigkeit gefüllt ist und mehrere in radialer Richtung angeordnete Dämpfungskörper umfasst, jeweils in Form von Zylinder-Kolben-Aggregaten, deren radial innen liegende Enden an einer gemeinsamen mittig in dem Kugelkörper angeordneten Halterung befestigt sind und deren radial außen liegende Enden direkt oder indirekt an der Innenwandung des Kugelkörpers befestigt sind.

Die US-Schrift US 5,558,191 beschreibt eine Dämpfungsvorrichtung für eine Primärstruktur, die über mindestens eine Feder sowie mindestens ein viskoelastisches Element mit einer Sekundärmasse verbunden ist. Die mindestens eine Feder und das mindestens eine viskoelastische Element vermögen die Bewegung der Sekundärmasse auf mindestens eine Dimension zu beschränken, so dass bei einer dynamischen Reaktion seitens der Primärstruktur, diese durch die Bewegung der Sekundärmasse gedämpft wird.

Die Druckschrift US 5,947,240 beschreibt eine Vorrichtung zur Isolierung von Lastschwingungen, die sowohl translatorische als auch rotatorische Schwingungen zwischen einer Abstützstruktur und einer Laststruktur zu dämpfen vermag. Die Vorrichtung umfasst eine Vielzahl mit der Last- und Abstützstruktur mittel- und unmittelbar verbundene, vorzugsweise baugleiche Kolben-Zylindereinheiten, deren Zylinderräume aktiv mit einem Fluid befüllt und entleert werden sowie jeweils paarweise fluidisch miteinander kommunizieren.

Die Druckschrift EP 382 479 B1 offenbart ein Verfahren zum Betrieb eines Aufhängungssystems mit zwei relativ zueinander beweglich gelagerten Gliedern, die über einen halbaktiven Dämpfer gelagert sind, der zwischen hoch- und niedrigdämpfenden Zuständen schaltbar ist. Der uniaxial auslenkbare Dämpfer verfügt über eine Bypassleitung, über die ein Arbeitsfluid zwischen zwei durch einen beweglich gelagerten Kolben getrennte Zylinderräume strömen kann. Längs der Bypassleitung ist ein Kontrollventil eingebracht, durch dessen Ventilstellung der Dämpfungsgrad des Dämpfers in Abhängigkeit des sensorisch erfassbaren Schwingungszustandes zwischen beiden Gliedern einstellbar ist.

Die Druckschrift US 5,118,086 beschreibt ein Elastomerfederelement für den bevorzugten Einsatz zur Federung in Kraftfahrzeugen. Das balgartig ausgebildete Federelement umschliesst einen länglichen Hohlraum, dessen konische Wandung aus elastomeren Material besteht, in die zusätzlich in axialen Abständen die Wandung umlaufende starre Elemente eingebracht sind.

Die Druckschrift US 3,101,937 A offenbart Anordnungen zur Vibrationsisolierung zwischen einem Basiselement und einer Last. Ein Flansch, der mit der Last verbunden ist, ist dabei über vier flexible Supporte mit dem Basiselement verbunden. Die flexiblen Supporte weisen jeweils eine elastische Fluidkammer auf, wobei die Fluidkammern von sich gegenüberliegenden Supporten jeweils durch eine Fluidleitung verbunden sind. Die Fluidkammer nach der Druckschrift US 3,101,937 A wird ausschließlich durch die Wandung des elastomeren Elements gebilbet, d.h. die Fluidkammerwand weist kein formstabiles Material auf, und die Druckschrift offenbart auch keine Fluidkammerwand mit wenigstens zwei unsterschiedlich groß dimensionierten Fluidkammerquerschnitten, die jeweils ein formstabiles Wandmaterial aufweisen.

### Darstellung der Erfindung

Der Erfindung liegt die Aufgabe zugrunde eine Vorrichtung zur bidirektionalen Lagerung einer ersten Struktur relativ zu einer zweiten Struktur längs einer ersten Raumachse, mit einem beide Strukturen miteinander verbindenden bidirektional auslenkbaren Lager derart weiterzubilden, so dass die erste Struktur zusätzlich zur bidirektionalen Auslenkung längs der ersten Raumachse, längs einer zur ersten Raumachse orthogonal orientierten zweiten Raumachse bidirektional auslenkbar lagerbar ist, wobei die für die Ausbildung der Lagerung erforderlichen Maßnahmen einen gegenüber bekannten Lagern signifikant kleineren Bauraum erfordern und mit möglichst einfachen, kostengünstigen und im Betrieb wartungsfreien Mitteln, die überdies über eine hohe Lebensdauer verfügen sollen, realisierbar sein sollen.

Die Lösung der Aufgabe ist in den Ansprüchen 1 und 3 angegeben. Die Erfindung in vorteilhafter Weise weiterbildende Merkmale sind Gegenstand der Unteransprüche sowie der weiteren Beschreibung insbesondere unter Bezugnahme auf die Figuren zu entnehmen.

Die der Erfindung zugrundeliegende Idee sieht zur Lagerung einer ersten gegenüber einer zweiten Struktur jeweils längs zwei orthogonal zueinander orientierter Raumachsen wenigstens ein Wandlerelement vor, das über eine Fluidkammer derart verfügt, dass das Wandlerelement einen in die oder aus der Fluidkammer gerichteten Fluidvolumenstrom oder eine auf das Wandlerelement gerichtete Druckänderung in eine längs einer Raumachse orientierten Bewegung und/oder Kraft umzusetzen vermag oder eine längs der jeweiligen Raumachse auf das Wandlerelement wirkende Kraft in einen in die oder aus der Fluidkammer gerichteten Fluidvolumenstrom oder eine Druckänderung innerhalb der Fluidkammer umzusetzen vermag. Jedes der Wandlerelemente verbindet die erste mit der zweiten Struktur jeweils bidirektional auslenkbar längs einer der zwei orthogonal zueinander orientierten Raumachsen, die jeweils mit einer dem jeweiligen Wandlerelement zugeordneten Hauptwirkrichtung koaxial orientiert ist.

Zusätzlich verfügt das Wandlerelement im Gegensatz zu konventionellen Kolben-Zylinder-Einheiten über elastisch entkoppelnde Eigenschaften quer zu der dem Wandlerelement zugeordneten Raumachse bzw. Hauptwirkrichtung. Ein besonders zu diesem Zwecke geeignetes Wandlerelement wird im Weiteren beschrieben, das über eine möglichst hohe elastische Verformbarkeit längs seiner Hauptwirkrichtung und zugleich über eine möglichst hohe Blähsteifigkeit verfügt, d.h. Verformungen des Wandlerelementes, die eine radial zur Hauptwirkrichtung orientierte Aufweitung der Fluidkammer des Wandlerelementes bewirken, unterliegen einer Steifigkeit, die signifikant größer ist als die dem Wandlerelement zuordenbare Längssteifigkeit, d.h. Steifigkeit in Hauptwirkrichtung. Durch Befüllen der Fluidkammer des Wandlerelementes mit einem kompressiblen oder inkompressiblen Fluid lässt sich das Steifigkeitsverhalten des Wanderelementes individuell einstellen. Wird beispielsweise die Fluidkammer des Wandlerelementes mit einem annähernd inkompressiblen Fluid, beispielsweise Wasser oder Öl gefüllt, und sei ferner vorausgesetzt, dass das Fluidkammervolumen, beispielsweise durch Absperrung einer Fluidzuleitung konstant ist, so ist die Steifigkeit des Wandlerelementes in Hauptwirkrichtung um Größenordnung größer als quer dazu.

Auch ist eine Befüllung des Wandlerelementes mit einem kompressiblen Fluid, beispielsweise Gas denkbar, wodurch die Steifigkeits- und Dämpfungseigenschaften des Wandlerelementes in Abhängigkeit des Fülldruckes und/oder einer Befüllungsdynamik kontrolliert änderbar bzw. einstellbar sind. Wandlerelemente der vorstehenden Art vermögen in Hauptwirkrichtung Druckkräfte jedoch keine Zugkräfte zu erzeugen und zu übertragen.

Eine erste Variante einer lösungsgemäßen Vorrichtung zur bidirektionalen Lagerung einer ersten Struktur relativ zu einer zweiten Struktur zeichnet sich derart aus, dass an zwei sich gegenüberliegenden Seiten der ersten Struktur längs einer ersten Raumachse jeweils ein Wandlerelement vorgesehen ist, das die erste Struktur mit der zweiten Struktur verbindet, wobei beide Wandlerelemente jeweils eine mit einem Fluid befüllbare Fluidkammer besitzen und einen in die oder aus der Fluidkammer gerichteten Fluidvolumenstrom oder eine auf das Wandlerelement gerichtete Druckänderung in eine längs der ersten Raumachse orientierte Bewegung und/oder Kraft umzusetzen vermögen oder eine längs der ersten Raumachse auf das Wandlerelement wirkende Kraft in einem in die oder aus der Fluidkammer gerichteten Fluidvolumenstrom oder eine Druckänderung innerhalb der Fluidkammer umzusetzen vermögen. Ferner sind längs einer zur ersten Raumachse orthogonalen zweiten Raumachse zwei weitere Wandlerelemente angeordnet, die längs der zweiten Raumachse an zwei sich gegenüberliegenden Seiten der ersten Struktur angeordnet sind und diese mit der zweiten Struktur verbinden. Auch die zwei weiteren Wandlerelemente weisen jeweils eine mit einem Fluid befüllbare Fluidkammer auf und vermögen einen in die oder aus der Fluidkammer gerichteten Fluidvolumenstrom oder eine auf das Wandlerelement gerichtete Druckänderung in eine längs der zweiten Raumachse orientierte Bewegung und/oder Kraft umzusetzen oder eine längs der zweiten Raumachse auf das Wandlerelement wirkende Kraft in einen in die oder aus der Fluidkammer gerichteten Fluidvolumenstrom oder eine Druckänderung innerhalb der Fluidkammer umzusetzen.

Die vorstehende lösungsgemäße Vorrichtung ermöglicht eine zweidimensionale Lagerung der ersten Struktur gegenüber der zweiten Struktur oder umgekehrt. Um ein räumlich, d.h. dreidimensional, wirkendes Lager zu realisieren, sieht eine bevorzugte Ausführungsform längs einer zur ersten und zweiten Raumachse orthogonalen dritten Raumachse zwei weitere Wandlerelemente vor, die längs der dritten Raumachse an zwei sich gegenüberliegenden Seiten der ersten Struktur angeordnet sind und diese mit der zweiten Struktur verbinden. Auch diese zwei weiteren, längs der dritten Raumachse angeordneten Wandlerelemente weisen jeweils eine mit Fluid befüllbare Fluidkammer auf, wobei sie einen in die oder aus der Fluidkammer gerichteten Fluidvolumenstrom oder eine auf das Wandlerelement gerichtete Druckänderung in eine längs der dritten Raumachse orientierte Bewegung und/oder Kraft umzusetzen vermögen oder eine längs der dritten Raumachse auf das Wandlerelement wirkende Kraft in eine in die oder aus der Fluidkammer gerichteten Fluidvolumenstrom oder eine Druckänderung innerhalb der Fluidkammer umzusetzen vermögen.

Die jeweils zwei längs einer gemeinsamen Raumachse an jeweils der ersten Struktur gegenüberliegenden Seiten angeordneten Wandlerelemente vermögen bei entsprechender Befüllung ihrer Fluidkammern entgegengesetzt zueinander gerichtete Druckkräfte auf die jeweils erste Struktur auszuüben, so dass die erste Struktur zwischen beiden Wandlerelementen längs einer Raumachse positionierbar eingespannt ist.

Demgegenüber ermöglicht eine geeignet räumliche Ausrichtung der ersten Struktur relativ zur zweiten Struktur, bei der zumindest anteilsmäßig längs der ersten und/oder zweiten Raumachse eine durch die Gravitationskraft wirkende Gewichtskraft der ersten oder zweiten Struktur wirkt, eine Lagerung der ersten Struktur relativ zur zweiten Struktur oder umgekehrt auch mit nur einem Wandlerelement pro Raumachse.

Für diesen Fall zeichnet sich eine alternative lösungsgemäße Vorrichtung dadurch aus, dass das Lager wenigstens zwei Wandlerelemente umfasst, von denen ein erstes Wandlerelement die erste Struktur längs der ersten Raumachse auslenkbar mit der zweiten Struktur verbindet und von denen ein zweites Wandlerelemente die erste Struktur längs einer zur ersten Raumachse orthogonalen zweiten Raumachse auslenkbar mit der zweiten Struktur verbindet, und dass beide Wandlerelemente jeweils eine mit einem Fluid befüllbare Füllkammer aufweisen, deren elastisches Ausdehnungsverhalten gleichsam der vorstehend erläuterten Wandlerelemente ist. Vorzugsweise sind beide Raumachse relativ zum Gravitationskraftvektor derart orientiert, so dass beide Raumachsen einen Winkel ungleich 0°, vorzugsweise 45° einschließen, zumal sich in diesem Fall die Gewichtskraft der ersten Struktur gleichmäßig auf beide Raumachsen als rückstellende Kraft verteilt, die den Wirkkräften beider Wandlerelementen entgegenwirken.

Anstelle von oder in Kombination mit der Nutzung der Gewichtskraft der ersten und/oder zweiten Struktur als rückstellende Gegenkraft zur jeweiligen Stellkraft durch das Wandlerelement pro Raumachse ist der Einsatz eines zusätzlichen Mittels längs der jeweiligen Raumachse denkbar, durch das eine zusätzliche Gegenkraft erzeugbar ist. Als Mittel bietet sich beispielsweise ein Feder- oder Elastomerelement an, das zwischen der ersten und zweiten Struktur jeweils dem Wandlerelement pro Raumachse gegenüberliegend angebracht ist.

Eine vorteilhafte Erweiterung der alternativen Lagerung unter Verwendung jeweils eines Wandlerelementes pro Raumachse sieht die Anordnung eines dritten Wandlerelementes längs einer zur ersten und zweiten Raumachse orthogonalen dritten Raumachse vor, das längs der dritten Raumachse die erste Struktur mit der zweiten Struktur auslenkbar verbindet. Auch in diesem Falle kann bei einer geeigneten räumlichen Orientierung der dritten Raumachse die Gewichtskraft der ersten bzw. der zweiten Struktur zumindest anteilsmäßig längs der dritten Raumachse wirken und als Gegenkraft zur Stellkraft des dritten Wandlerelementes dienen.

Alternativ oder in Kombination mit der längs der dritten Raumrichtung wirkenden Gewichtskraft lässt sich in vorteilhafter Weise längs der dritten Raumrichtung das vorstehend erläuterte Mittel anordnen, durch das eine längs der dritten Raumachse zwischen der ersten und zweiten Struktur wirkende Rückstellkraft erzeugbar ist.

Vorzugsweise sind die Fluidkammern sämtlicher Wandlerelemente jeweils mit einer Fluidleitung verbunden, längs der ein Absperrelement eingebracht ist, beispielsweise in Form einer variabel einstellbaren Drossel, die aus einer geöffneten Stellung, in der Fluid in die oder aus der Fluidkammer strömen kann, in eine geschlossene Stellung oder umgekehrt kontinuierlich oder diskret überführbar ist, in der die Fluidkammer fluiddicht abgeschlossen ist.

Wie sich aus der weiteren Beschreibung zur Erläuterung der nachstehenden Ausführungsbeispiele ergibt, eignen sich für eine kontrollierte und koordinierte zwei- oder dreidimensionale Lagerung der ersten Struktur gegenüber der zweiten Struktur eine Vielzahl vorteilhafter Maßnahmen, die sich einzeln oder in Kombination anwenden lassen. Derartige Maßnahmen sind unter anderem:
- Wenigstens zwei längs einer Raumachse angeordnete Wandlerelemente sind über eine Fluidleitung miteinander verbunden, so dass deren Fluidkammern fluidisch miteinander kommunizieren. Längs der Fluidleitung können steuerbare oder regelbare, die Fluidströmung beeinflussende Komponenten angeordnet sein, wie beispielsweise Fluidförderpumpen, oder ansteuerbare Drossel- oder Ventileinheiten.
- Zum Zwecke einer aktiven Ansteuerung wenigstens eines Wandlerelementes bietet es sich an, das Wandlerelement mit einem Wegmesssensor zu kombinieren, um Stellwege des Wandlerelementes aktuell zu erfassen, um bspw. die Zu- oder Ableitung eines Arbeitsfluids in die oder aus den Wandlerelementen zu regeln.

Weitere vorteilhafte Maßnahmen zur zwei- oder dreidimensionalen Lagerung einer ersten Struktur gegenüber einer zweiten Struktur sind den nachfolgenden, illustrierten Ausführungsbeispielen zu entnehmen.

### Kurze Beschreibung der Erfindung

Die Erfindung wird nachstehend ohne Beschränkung des allgemeinen Erfindungsgedankens anhand von Ausführungsbeispielen unter Bezugnahme auf die Zeichnungen exemplarisch beschrieben. Es zeigen:
- Fig. 1: Lagerung mit jeweils zwei Wandlerelementen pro Raumachse,
- Fig. 2: Lagerung mit jeweils einem Wandlerelemente pro Raumachse,
- Fig. 3: Lager mit jeweils zwei fluidisch miteinander kommunizierenden Wandlerelementen,
- Fig. 4: Lager mit semipassiven Anbindungsimpedanzen,
- Fig. 5: Lager mit einstellbarer Steifigkeit,
- Fig. 6: Lager mit teilweise einstellbarer mehraxialer Lagerung,
- Fig. 7a: Lager mit mehraxialer aktiv anpassbarer Anbindungsimpedanz, vorzugsweise geeignet für die Verwendung als aktives, multiaxiales Isolationselement,
- Fig. 7b: Detailansicht des Lagers gemäß Figur 7 mit einer optionalen Erweiterung,
- Fig. 8: Schematisierte Teillängsschnittdarstellung durch ein lösungsgemäß ausgebildetes Wandlerelement,
- Fig. 9: Längsschnitt durch eine weitere bevorzugte Ausführungsform eines Wandlerelementes,
- Fig. 10: Detailansicht einer Fluidwand des in Fig. 9 illustrierten Ausführungsbeispiels,
- Fig. 11: Detailansicht einer alternativ ausgebildeten Fluidwand,
- Fig. 12: Modulkomponente bestehend aus zwei über ein Elastomerwandabschnitt miteinander verbundene Ringstrukturen,
- Fig. 13: Wandlerelement, aufgebaut auf Basis einer Vielzahl der in Fig. 12 illustrierten Modulkomponenten,
- Fig. 14: Alternative Modulkomponente sowie
- Fig. 15: Wandlerelement, aufgebaut aus einer Vielzahl der in Fig. 14 illustrierten Modulkomponenten.

### Wege zur Ausführung der Erfindung, gewerbliche Verwendbarkeit

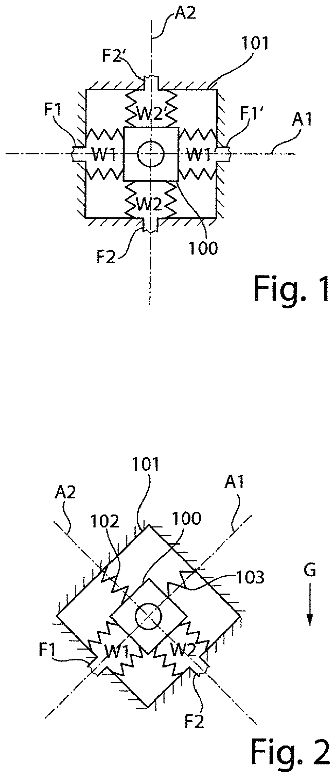

Figur 1 illustriert einen schematischen Querschnitt durch eine erste Struktur 100 und eine zweite Struktur 101. Es sei angenommen, dass die zweite Struktur 101 die erste Struktur 100 in der durch die Raumachsen A1 und A2, die beide orthogonal zueinander orientiert sind, definierten Ebene, die der Zeichenebene gemäß Figur 1 entspricht, umgibt. Die erste Struktur 100 ist längs der ersten Raumachse A1 über jeweils zwei an entgegengesetzten Seiten der ersten Struktur 100 angebrachten Wandlerelemente W1, W1' mit der zweiten Struktur 102 verbunden. Gleichsam ist die erste Struktur 100 längs der zweiten Raumachse A2 an jeweils gegenüberliegenden Seiten über Wandlerelemente W2, W2' mit der zweiten Struktur 101 verbunden. Sämtliche Wandlerelemente W1, W1', W2, W2' verfügen über eine Fluidzu- bzw. -ableitung F1, F1', F2, F2`, über die ein flüssiges oder gasförmiges Arbeitsmittel in die bzw. aus den jedem Wandlerelement zuführbar oder ausleitbar ist. Jedes einzelne Wandlerelement ist vorzugsweise gleichartig ausgebildet und verfügt über eine balgartig ausgebildete Wandlerelementwand, die jeweils eine Fluidkammer fluiddicht abdichtet. Auf diese Weise stützt sich die erste Struktur 100 über die im Ausführungsbeispiel gemäß Figur 1 entnehmbaren vier Wandlerelemente W1, W 1', W2, W2' längs der orthogonal zueinander orientierten Raumachsen A1, A2 gegenüber der zweiten Struktur 102 ab.

Die zwei jeweils längs einer Raumachse A1, A2 gegenüberliegend zur ersten Struktur 100 angeordneten Wandlerelemente W1, W1', W2, W2' vermögen in Abhängigkeit des Arbeitsmittelfülldruckes ausschließlich zueinander entgegengesetzt gerichtete und variabel einstellbare Druckkräfte auf die erste Struktur 100 auszuüben.

Im Gegensatz hierzu sieht das in Fig. 2 illustrierte Ausführungsbeispiel lediglich ein Wandlerelement W1, W2 pro Rauchachse A1, A2 vor. Auch in diesem Fall vermögen die Wandlerelemente W1, W2 lediglich längs der Raumachsen A1, A2 orientierte Druckkräfte auf die erste Struktur 100 auszuüben. Für eine kontrollierte Lagerung der ersten Struktur 100 relativ zur zweiten Struktur 101 bedarf es jedoch längs beider Raumachsen A1 und A2 entsprechende Gegenkräfte zu den Stellkräften der einzelnen Wandlerelementen W1, W2. Hierzu dient im einfachsten Fall eine geeignete räumliche Orientierung beider Raumachsen A1, A2 relativ zur vertikal wirkenden Gravitationskraft, vorzugsweise jeweils geneigt um 45° relativ zum Gravitationsvektor G, wodurch anteilsmäßig längs beider Raumachsen A1, A2 die Gewichtskraft der ersten Struktur 100 jeweils als Gegenkraft zu den Stellkräften der Wandlerelemente W1, W2 wirkt.

Alternativ oder in Kombination zur Nutzung der durch die erste Struktur 100 hervorgerufenen Gewichtskraft eignen sich längs der jeweiligen Raumachsen A1, A2 zwischen der ersten und zweiten Struktur 100, 101 angeordnete Mittel 102, 103, beispielsweise in Form von Feder- oder Elastomerkomponenten, die eine entsprechende Gegenkraft zu erzeugen in der Lage sind.

Die vorstehenden sowie auch die nachfolgenden Illustrationen stellen jeweils bidirektional auslenkbare Lager längs zweier orthogonal zueinander orientierter Raumachsen A1, A2 dar. Sofern nicht explizit angegeben sind die Ausführungsbeispiele auch als dreiaxiale Lager realisierbar, jeweils mit ein oder zwei zusätzlichen Wandlerelementen, die längs einer zu den ersten und zweiten Raumachsen orthogonalen dritten Raumachse zwischen der ersten und zweiten Struktur angeordnet sind.

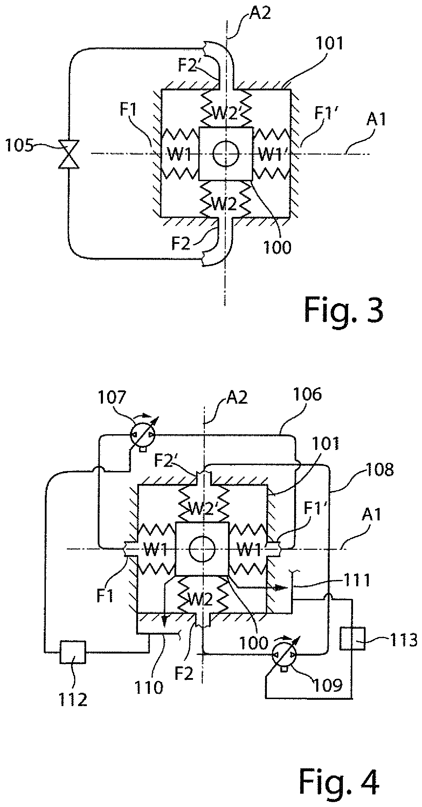

Figur 3 illustriert ein Lager zur kontrollierten bidirektionalen Bewegung längs einer Raumachse A2. Hierbei sind die Fluidanschlüsse F2, F2' der sich längs der zweiten Raumachse A2 gegenüberliegend angeordneten Wandlerelemente W2, W2' mit einer Fluidleitung 104 verbunden, längs der optional eine Drossel 105 integriert sein kann. Demgegenüber sind die Fluidanschlüsse F1, F1' der längs der Raumachse A1 angeordneten Wandlerelemente W1, W1' geschlossen. In diesem Fall dient das Lager als bidirektionale Führung längs der Raumachse A2. So besitzt die erste Struktur 100 gegenüber der zweiten Struktur 101 lediglich einen Freiheitsgrad, der die bidirektionale Bewegung der ersten Struktur 100 längs der Raumachse A2 ermöglicht. Über die optionale Drossel 105 kann überdies eine Dämpfung der bidirektionalen Bewegung der ersten Struktur 100 eingestellt werden. Wird die optionale Drossel 105 vollständig verschlossen, kann die Struktur 100 relativ zur Struktur 101 in einer Position entlang der Raumachse A2 festgehalten bzw. positioniert werden.

Werden hingegen die Fluidanschlüsse F2, F2' geschlossen und die Fluidanschlüsse F1, F1' der Wandlerelemente W1, W1` mit einer Fluidleitung, nicht dargestellt, verbunden, so ergibt sich eine bidirektional einaxiale Lagerung der ersten Struktur 100 längs der ersten Raumachse A1.

Im Falle des in Fig. 4 illustrierten Ausführungsbeispiels ist die Lagerung zum Zwecke einer aktiven Positionierung der ersten Struktur 100 relativ zur zweiten Struktur 101 ausgebildet. Hierzu sind die Fluidanschlüsse F1, F1' der längs der ersten Raumachse A1 jeweils beidseitig zur ersten Struktur 100 angeordneten Wandlerelemente W1, W1` mit einer Fluidleitung 106 verbunden, längs der eine Fluidpumpe 107 integriert ist. In gleicher Weise sind die Fluidanschlüsse F2, F2' der Wandlerelemente W2, W2' über eine Fluidleitung 108 verbunden, längs der eine Fluidpumpe 109 integriert ist. Vorzugsweise sind die Fluidpumpen 107 und 109 bezüglich ihrer Pumprichtung sowie der Pumpleistung steuerbar, so dass über eine geeignete Pumpensteuerung eine Positionierung der ersten Struktur 100 relativ zur zweiten Struktur 101 oder umgekehrt möglich wird.

Optional können zur Wegmessung bzw. zur Erfassung der räumlichen Auslenkung der ersten Struktur 100 relativ zur zweiten Struktur 101 längs der ersten und zweiten Raumachse A1, A2 jeweils Wegmesssysteme 110, 111 angeordnet werden, deren Messsignale an eine Regeleinheit 112, 113 zuführbar sind, um die Fluidpumpen 107, 109 entsprechend aufeinander abgestimmt anzusteuern.

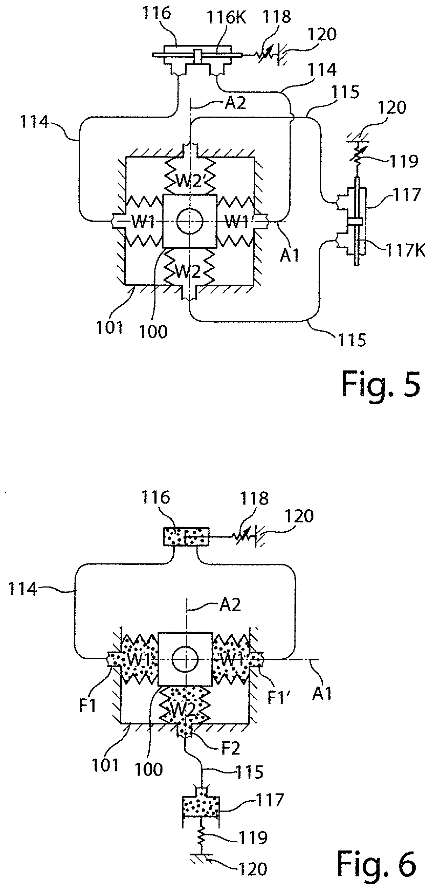

In Figur 5 ist ein Lager mit einer semipassiven Anbindungsimpedanz gezeigt, bei dem die jeweils längs einer Raumachse A1, A2 relativ zur ersten Struktur 100 gegenüberliegend angeordneten Wandlerelemente W1, W1` sowie W2, W2' jeweils über Fluidleitungen 114, 115 verbunden sind. Längs der Fluidleitungen 114, 115 ist jeweils ein hydraulisch-mechanisches Wandlerelement 116, 117 integriert. Vorzugsweise ist das hydraulisch-mechanische Wandlerelement 116, 117 als Kolben-/Zylindereinheit ausgebildet, zu dessen Kolbenauslenkung die Fluidleitungen 114, 115 jeweils in den Kolben-Zylinderraum einmünden. Der mechanische Ausgang des hydraulisch-mechanischen Wandlerelementes 116, 117, vorzugsweise in Form einer Kolbenstange 116K, 117K, ist jeweils über eine einstellbare Steifigkeit 118, 119 mit einer weiteren Struktur 120 als mechanisches festes Gegenlager verbunden.

Weitere geeignete hydraulisch-mechanische Wandlerelemente ohne oder innere Reibung oder nur einer sehr geringen inneren Reibung stellen Metall-, Gewebe- oder Elastomerbälge dar.

Mit Hilfe der einstellbaren Steifigkeiten 118, 119 ist die Steifigkeit, mit der die erste Struktur 100 relativ zur zweiten Struktur 101 gelagert ist, individuell einstellbar. So ergibt sich Steifigkeit längs der Raumachsen A1, A2 in erster Näherung direkt aus den jeweils eingestellten Steifigkeiten 118, 119. Die Steifigkeiten in sämtlichen Richtungen innerhalb der aus den Raumachsen A1 und A2 aufgespannten Ebene ergeben sich durch geometrische Addition der jeweiligen Steifigkeiten längs der Raumachsen A1 und A2.

In bevorzugter Weise eignet sich als einstellbare Steifigkeit die in der Druckschrift DE 10 2011 015 798 B4 offenbarte Vorrichtung zur Übertragung oder Entkopplung von mechanischen Schwingungen.

Figur 6 zeigt ein mehraxiales Lager, bei dem längs der Raumachse A2 die erste Struktur 100 über jeweils zwei Wandlerelemente W1, W1` bidirektional auslenkbar zur zweiten Struktur 101 gelagert ist. Gleichsam dem in Figur 5 beschriebenen Ausführungsbeispiel sind die Wandlerelemente W1, W1` über eine Fluidleitung 114 fluidisch mit einem hydraulisch-mechanischen Wandlerelement 116 verbunden, dessen mechanischer Ausgang mit einer einstellbaren Steifigkeit 118 gekoppelt ist, die sich einseitig an einem mechanisch festen Gegenlager bzw. einer weiteren Struktur 120 abstützt. Durch den in Figur 6 illustrierten Aufbau können die Steifigkeitseigenschaften der ersten Struktur 100 gegenüber der zweiten Struktur 101 in Wirkrichtung der Wandlerelemente W1, W1', d.h. längs der ersten Raumachse A1 durch die einstellbare Steifigkeit 118 individuell eingestellt werden.

Längs der orthogonal zur ersten Raumachse A1 orientieren zweiten Raumachse A2 ist lediglich ein einziges Wandlerelement W2 zwischen der ersten Struktur 100 und der zweiten Struktur 101 angeordnet, dessen Fluidanschluss F2 ebenfalls mit einem hydraulisch-mechanischen Wandlerelement 117 über eine Fluidleitung 115 fluidisch verbunden ist. Das hydraulisch-mechanische Wandlerelement 117 ist mit seinem mechanischen Ausgang mit einer Steifigkeit 119 verbunden, die sich wiederum an einer weiteren Struktur 120 abstützt.

An dieser Stelle sei erwähnt, dass die weitere Struktur 120, mit der weiteren Struktur 101 identisch sein kann. Dies trifft ebenso auch auf das Ausführungsbeispiel gemäß Figur 5 zu.

Durch die Verwendung eines einzigen Wandlerelementes W2, dessen Hauptwirkrichtung parallel zur Raumachse A2 orientiert ist, die vorzugsweise parallel zum Gravitationskraftvektor G orientiert ist, wird als Gegenkraft das Eigengewicht der ersten Struktur 100 genutzt, um auf diese Weise durch den möglichen Verzicht eines dem Wandlerelement W2 gegenüberliegend angeordneten zweiten Wandlerelementes Bauraum zu sparen.

Zur Ausführung einer längs der Raumachse A2 orientierten, alternierenden Bewegung der ersten Struktur 1 um eine virtuelle Nulllage mit dem in Figur 6 illustrierten Lager, ist im hydraulischen System, das das Wandlerelement W2, die Fluidleitung 115 und den hydraulisch-mechanischen Wandlerelement 117 umfasst, ein statischer Vordruck erforderlich, um die Bewegung bzw. die hydraulischen Kräfte in positive Richtung der Raumachse A2, d.h. vertikal nach oben, übertragen zu können und um Kavitationseffekte innerhalb des hydraulischen Systems zu vermeiden.

Demgegenüber kann durch Verwendung jeweils zweier entgegengesetzt wirkender Wandlerelemente W1, W1' längs der ersten Raumachse A1 auf einen Vordruck innerhalb des hydraulischen Systems weitestgehend vermieden werden.

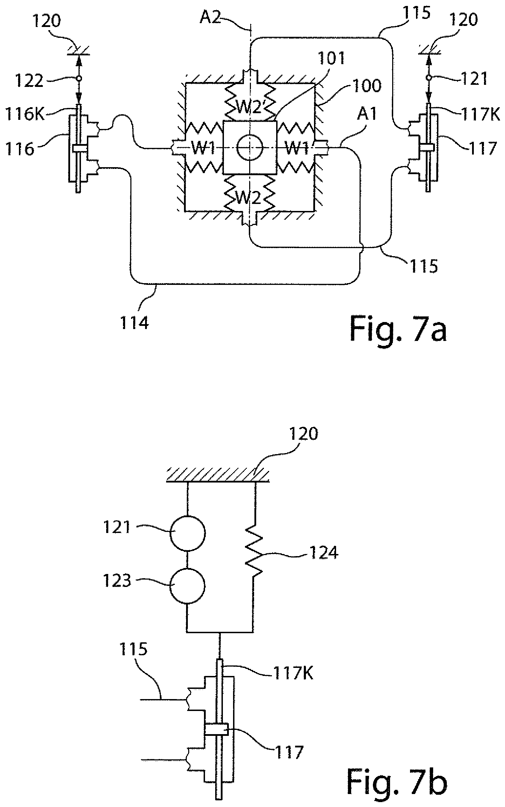

Figur 7a zeigt ein weiteres Ausführungsbeispiel zur Realisierung eines Lagers, das anstelle der in Figur 5 vorgesehenen Steifigkeiten 118, 119 jeweils einen Aktor 121, 122 vorsieht, die jeweils geregelt betreibbar sind. Gleichsam dem in Figur 5 gezeigten Lager verfügt auch das in Figur 7 illustrierte Lager über eine mehraxiale, aktive Anbindungsimpedanz und lässt sich vorzugsweise als aktives multiaxiales Isolationselement einsetzen.

Figur 7b zeigt eine Detailansicht im Bereich zwischen dem mechanischen Ausgang des hydraulisch-mechanischen Wandlerelementes 117, vorzugsweise in Form einer Kolbenstange 117K, und dem mechanischen Gegenlager 120, in dem zusätzlich zum Aktor 121 eine in Serie geschaltete Entkopplungseinheit 123 sowie parallel zum Aktor 121 und der Entkopplungseinheit 123 eine Steifigkeit 124, die vorzugsweise einstellbar ist, angebracht sind. Eine derartige, in der Druckschrift EP 2 615 325 A1 näher beschriebene Lagerung sorgt insbesondere dafür, dass der Aktor 121 121 nicht mit statischen Lasten beaufschlagt wird. Selbstverständlich ist eine derartige Lagerung auch zwischen dem nicht in Fig. 7b gezeigten hydraulisch-mechanischen Wandlerelement 116 und dem mechanischen Gegenlager 120 vorzunehmen,

Je nach Art und aufeinander abgestimmter Betriebsweise beider Aktoren 121, 122 lassen sich pro Raumachse unterschiedliche Anschlussmöglichkeiten realisieren:
- Abgeschlossen, vgl. W1, W1' in Figur 3
- Anschluss an System mit konstantem Druck z.B. Membranspeicher. In diesem Fall ist der Druck einstellbar und unabhängig vom Verformungszustand des Wandlerelementes.
- Anschluss an ein anderes Wandlerelement des gleichen Systems
- Anschluss an einen aktiven Antrieb, siehe Figur 4 und 7.

Mit dem lösungsgemäß ausgebildeten Lager lassen sich die erste und zweite Struktur in einem sehr weiten Frequenzbereich dynamisch zueinander bewegen. Insbesondere die Ausbildung der Wandlerelemente W1, W1', W2, W2' in einer der nachfolgend erläuterten Ausführungsformen, hilft die Abmessungen des Lagers deutlich kleiner zu realisieren als beispielsweise unter Verwendung an sich bekannter Hydraulikzylinder.

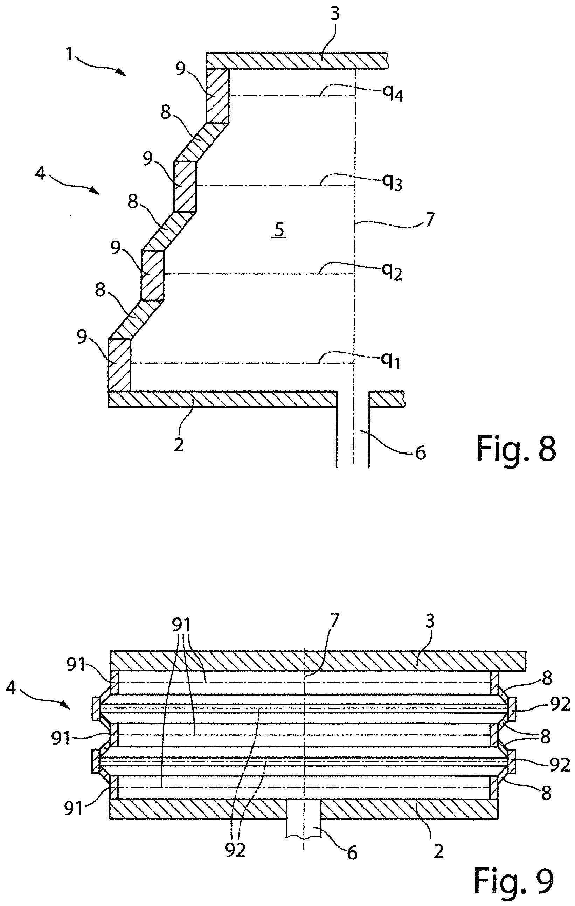

Für die Ausbildung sämtlicher Wandlerelemente eignen sich grundsätzlich beliebige bidirektional verformbare, balgförmig ausgebildete Wandlerelemente. Im Weiteren wird unter Bezugnahme auf die Figuren 8 bis 15 ein besonders geeignetes Wandlerelement erläutert, das sich für den Einsatz in dem lösungsgemäß ausgebildeten Lager besonders gut eignet.

Figur 8 zeigt einen hälftigen, Längsschnitt durch ein Wandlerelement, das eine Fluidkammer 1 aufweist, die mit einem Kammerboden 2, einem Kammerdeckel 3 sowie einer Kammerwand 4 ein inneres Kammervolumen 5 umfasst. Der Kammerboden 2 sowie Kammerdeckel 3 sind jeweils aus einem formstabilen Material gefertigt und schließen fluiddicht längs ihrer Umfangsränder an die Kammerwand 4 an. Zur Integration des Wandlerelementes in das Lager 20 bietet es sich an den Kammerdeckel 3 mit der ersten Struktur 100 und den Kammerboden 2 mit der zweiten Struktur 101 fest zu fügen. Alternativ kann jedoch auch anstelle von Kammerboden 2 und Kammerdeckel 3 die Kammerwand unmittelbar jeweils stirnseitig einerseits an der ersten Struktur und andererseits an zweiten Struktur fluiddicht gefügt sein.

Zusätzlich mündet durch den Kammerboden 2 eine Fluidleitung 6 in das Kammervolumen 5. Die Fluidleitung 6 ist mit einem nicht weiter dargestellten Fluidreservoir verbunden, in dem ein kompressibles oder inkompressibles Fluid bevorratet ist. Das Kammervolumen 5 ist über eine ebenso nicht weiter dargestellte Förderpumpe mit dem aus dem Fluidreservoir bevorrateten Fluid druckbeaufschlagt befüllbar. Eine gleichsam nicht weiter dargestellte Absperreinheit längs der Fluidleitung 6 sorgt für eine bedarfsgerechte fluiddichte Unterbrechung bzw. Schließung der Fluidleitung 6.

Die Kammerwand 4 setzt sich in Längsrichtung 7 der Fluidkammer 1 aus einer abwechselnden Abfolge jeweils von aus elastomeren Material bestehenden Wandabschnitten 8 und aus formstabilen Material bestehenden Wandabschnitten 9 zusammen. Die aus formstabilem Material bestehenden Wandabschnitte 9 bilden formstabile Ringstrukturen, die die Kammerwand 4 längs der diesen zugeordneten Fluidkammerquerschnitten q1, q2, q3 und q4 vollumfänglich umfassen. Die Ringstrukturen 9 können bspw. als ringförmige Metallbänder ausgebildet sein, an die sich jeweils fluiddicht die elastomeren Wandabschnitte 8 beidseitig anfügen.

Im dargestellten Ausführungsbeispiel nehmen die Querschnittsflächen der jeweils von den Ringstrukturen 9 umfassten Fluidkammerquerschnitten q1, q2, q3 und q4 in der Bilddarstellung von unten nach oben stufenweise ab. Auf diese Weise sind die aus elastomerem Material bestehenden Wandabschnitte 8 geneigt gegenüber der Längsrichtung 7 orientiert und ermöglichen aufgrund ihrer elastischen Materialeigenschaften und ihre jeweils in Längsrichtung beidseitig festen Verbindung mit den Ringstrukturen 9 eine bevorzugte Verformung in Längsrichtung 7. Wird bspw. durch entsprechende Zu- oder Ableitung von Fluid in die oder aus der Fluidkammer 1 der auf die Kammerwand 4 lastende Fluiddruck variiert, so äußert sich dies durch eine Stellwegänderung des Wandlerelementes in Längsrichtung 7. Wird der Fluiddruck reduziert, so bewegen sich Kammerdeckel 3 und Kammerboden 2 aufeinander zu, wird hingegen der Fluiddruck innerhalb der Fluidkammer 1 erhöht, wächst der Abstand zwischen Kammerboden 2 und Kammerdeckel 3 in Längsrichtung 7 an. Eine Verformung der Fluidkammer 1 durch bloße Variation des Fülldruckes innerhalb der Fluidkammer 1 quer zur Längsrichtung 7 ist durch die um die Längsrichtung 7 hermetische Ausbildung der Ringstrukturen 9 vollständig unterbunden. Die formstabilen Ringstrukturen 9 verleihen dem Wandlerelement eine hohe Blähfestigkeit, d. h. eine Verformung quer zur Längsrichtung 7 wird durch die Ringstrukturen 9 unterbunden bzw. weitgehend unterbunden.

Sei demgegenüber angenommen, dass auf den Kammerdeckel 3 eine externe Last einwirkt und die Fluidkammer 1 befüllt und ansonsten fluiddicht abgeschlossen, bspw. durch Verschließen der Fluidleitung 6 mittels der vorstehend erwähnten nicht dargestellten Absperreinheit, so vermag das Wandlerelement nicht nur parallel zur Längsrichtung orientierte Lastkräfte, sondern auch quer zur Längsrichtung 7 orientierte Lasten durch eine begrenzt vorhandene Verformbarkeit quer zur Längsrichtung aufzunehmen. Derartige Fluidkammerwandverformungen mit geschlossener Fluidleitung erfolgen bei Befüllung der Fluidkammer mit einem inkompressiblen Fluid unter konstantem bzw. weitgehend konstantem Kammervolumen 5.

Figur 9 zeigt ein Ausführungsbeispiel eines Wanderelementes mit einem formstabil ausgebildeten Kammerdeckel 3 sowie einem formstabil ausgebildeten Kammerboden 2, durch den in das Kammervolumen 5 eine Fluidleitung 6 mündet. Im Gegensatz zu dem in Figur 8 illustrierten Wanderelement, das über eine nach Außen gestuft konisch in Erscheinung tretende Kammerwand 4 verfügt, umfasst die Kammerwand 4 im Ausführungsbeispiel gemäß Figur 9 ein weitgehend zylinderförmiges Kammervolumen 5. Die Kammerwand 4 ist in diesem Fall in Art einer Faltenbalgstruktur ausgebildet und setzt sich in Längsrichtung 7 aus einer seriellen Abfolge von aus formstabilem Material bestehenden Ringstrukturen 91, 92 und aus elastischem Material bestehenden Wandabschnitten 8 zusammen. Die Ringstrukturen 91 weisen jeweils identische Größen und Formen auf. Ebenso sind die Ringstrukturen 92 identisch dimensioniert, jedoch umfassen die Ringstrukturen 92 größer dimensionierte Fluidkammerquerschnitte q2 als die von den Ringstrukturen 91 umfassten Fluidkammerquerschnitten q1.

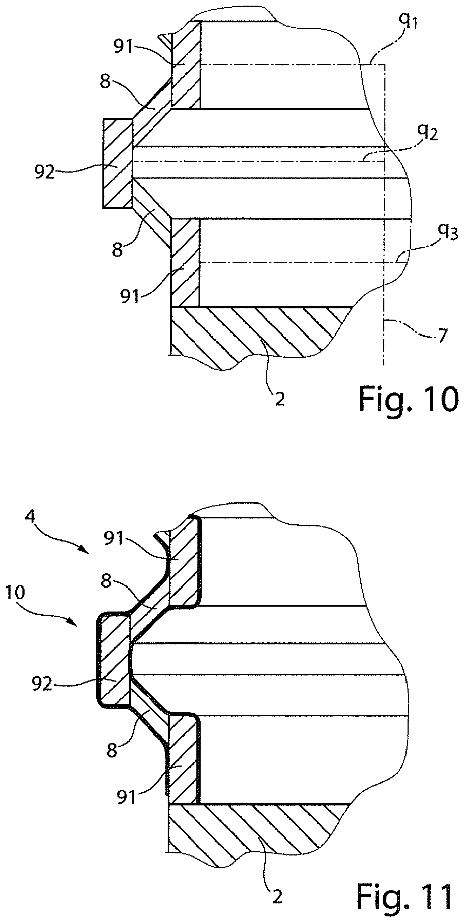

Figur 10 zeigt einen detaillierten Ausschnitt der betreffenden Kammerwandabschnitte 91, 8, 92, 8. Unmittelbar am Kammerboden 2 grenzt fluiddicht eine Ringstruktur 91 an, die fluiddicht mit einem elastomeren Wandabschnitt 8 verbunden ist, der im Weiteren mit an die Ringstruktur 92 fluiddicht gefügt ist, die einen Fluidkammerquerschnitt q2 radial vollständig umfasst, der größer ist als der Fluidkammerquerschnitt q1. Die Ringstruktur 92 ist ferner mit einer weiteren Ringstruktur 91 über einen elastomeren Wandabschnitt 8 verbunden. Der in Figur 10 dargestellte Fluidkammerwandabschnitt ist in Art eines Elastomergelenkes ausgebildet, das eine Verformung des Wandlerelementes bei entsprechender Fluiddruck- bzw. Kammervolumenänderung in Längsrichtung 7, die der Wirkrichtung des Wandlerelementes entspricht, ermöglicht. Eine radial zur Längsrichtung 7 orientierte Blähverformung bzw. Aufweitung, die der Blähsteifigkeit des Wandlerelementes entspricht, kann über das Oberflächenverhältnis zwischen den Ringstrukturen 91, 92 und den elastomeren Wandabschnitten 8 beeinflusst werden. Grundsätzlich gilt, je geringer der freie Oberflächenanteil der elastomeren Wandabschnitte 8 gewählt wird, umso größer ist die Blähsteifigkeit, d. h. umso geringer ist die dem Wandlerelement quer zur Längsrichtung 7 orientierte elastische Verformbarkeit.

Durch die in den Figuren 9 und 10 gewählte alternierende Abfolge von Ringstrukturen 91 und 92, die jeweils unterschiedlich groß dimensionierte Fluidkammerquerschnitte q1, q2 umfassen, wird der Bereich bzw. der Stellweg einer in Längsrichtung 7 orientierten Verformbarkeit vergrößert. Wird bspw. das Wandlerelement in Form eines Aktor genutzt, d. h. über die Fluidleitung 6 wird druckbetrieben kontrolliert Fluid zu- bzw. abgefördert, so vermag das Wandlerelement in Längsrichtung große Stellwege zu realisieren.

In Figur 11 ist eine alternative Ausbildungsform der Kammerwand 4 illustriert, bei der die aus formstabilem Material gefertigten Ringstrukturen 91, 92 sowie die mit diesen fluiddicht verbundenen elastomeren Wandabschnitte 8 mit einer zusätzlichen fluiddichten, elastomeren Zusatzschicht 10 überzogen sind, um insbesondere die formstabilen Ringstrukturen 91, 92 gegenüber äußeren Umwelteinflüssen zu schützen.

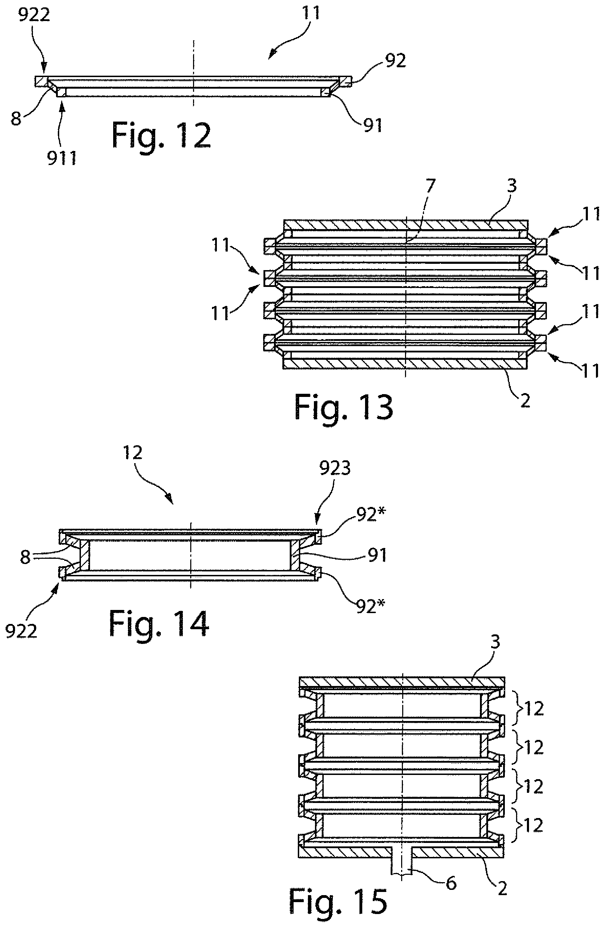

Figur 12 illustriert eine Modulkomponente 11 bestehend aus einer ersten Ringstruktur 91 sowie einer zweiten Ringstruktur 92, die jeweils über einen elastomeren Wandabschnitt 8 miteinander verbunden sind. Die Modulkomponente 11 dient zum Aufbau von in Längsrichtung 7 beliebig skalierbarer Wandlerelemente. Figur 13 illustriert ein Wandlerelement, das durch entsprechend wechselseitiges Zusammenfügen einer Vielzahl der in Figur 12 illustrierten Modulkomponente 11 zusammengebaut ist. So weisen die Ringstrukturen 91, 92 jeweils Fügeflächen 911, 921 auf, über die jeweils in Längsrichtung 7 benachbart angeordnete Modulkomponenten 11 paarweise aneinander gefügt werden. Die Fügung kann mittels Kraft-, Form- oder Stoffschlussverbindung erfolgen, vorzugsweise eignen sich Klebe- oder Schweißverbindungen, gleichfalls sind Schraub- oder Klemmverbindungen denkbar.

In dem in Figur 13 illustrierten Wandlerelement sind jeweils acht der in Figur 12 illustrierten Modulkomponenten 11 entsprechend in Längsrichtung 7 aneinander gefügt. Je nach Bedarf und Einsatzzweck des Wandlerelementes kann die Anzahl der in Längsrichtung 7 zwischen dem Kammerboden 2 und dem Kammerdeckel 3 angeordneten Modulkomponenten 11 geeignet gewählt werden.

Figur 14 zeigt eine weitere Variante für eine Modulkomponente 12, die eine Ringstruktur 91 vorsieht, die in Längsrichtung 7 beidseitig mit elastomeren Wandabschnitten 8 verbunden ist, an denen jeweils modifiziert ausgebildete Ringstrukturen 92* angebracht sind. Die modifiziert ausgebildeten Ringstrukturen 92* weisen jeweils in Längsrichtung 7 Fügekonturen 922, 923 auf, die bspw. in Art einer Feder-Nut-Verbindungskontur ausgebildet sind und bei jeweils entgegengesetzt paarweisem Eingriff unter Ausbildung eines Formschlusses ineinandergreifen. Auf diese Weise zentrieren sich die Modulkomponenten 12 beim Zusammenbau selbstständig. Ein durch den Zusammenbau von vier derartigen Modulkomponenten 12 gefertigtes Wandlerelement ist in Figur 15 illustriert. Auch in diesem Fall gilt es die Fügestellen zwischen jeweils zwei benachbarten Modulkomponenten 12 an den entsprechenden Fügekonturen 922, 923 durch zusätzliche Schweiß-, Kleb- und/oder Klemmverbindungen belastbar auszugestalten.

Das Wandlerelement zeichnet sich durch den vorstehend beschriebenen Verbund aus elastomeren Wandabschnitten 8 und formstabilen Ringstrukturen 9, 91, 92 aus, der eine hohe Blähsteifigkeit bei gleichzeitig großer elastischer Verformbarkeit längs der, der Hauptwirkrichtung des Wandlerelementes entsprechenden Längsrichtung besitzt. Insbesondere durch Verwendung der vorstehend erläuterten Modulkomponenten 11, 12 ist eine günstige und beliebig skalierbare Herstellung von Wandlerelementen aus kostengünstigen Rohstoffen möglich. Ein besonderer Vorteil des Wandlerelementes besteht darin, dass das Wandlerelement fluiddicht und leckagefrei ausgebildet ist und somit eine vollständig reibungsfreie hydraulische oder pneumatische Komponente darstellt, die neben ihrer Verformbarkeit in Längs- bzw. Hauptwirkrichtung über eine Querverformbarkeit verfügt, die überdies nur einen geringen Bauraum benötigt.

### Bezugszeichenliste

- 1: Fluidkammer
- 2: Kammerboden
- 3: Kammerdeckel
- 4: Kammerwand
- 5: Kammervolumen
- 6: Fluidleitung
- 7: Längsrichtung
- 8: aus elastomerem Material bestehender Wandabschnitt
- 9: aus formstabilem Material bestehender Wandabschnitt bzw. Ringstruktur
- 91, 92: Ringstruktur
- 91 *, 92*: Ringstruktur
- 10: elastomerer Überzug
- 11: Modulkomponente
- 12: Modulkomponente
- 911,921: Fügeflächen
- 922, 923: Fügekontur in Art einer Federnutverbindung
- W1, W1`, W2, W2`: Wandlerelement
- F1, F1', F2, F2': Fluidanschluss
- A1, A2, A3: Raumachse
- G: Gravitationskraft
- 100: Erste Struktur
- 101: Zweite Struktur
- 102: Mittel zur Erzeugung einer Gegenkraft
- 103: Mittel zur Erzeugung einer Gegenkraft
- 105: Drossel
- 106: Fluidleitung
- 107: Fluidpumpe
- 108: Fluidleitung
- 109: Fluidpumpe
- 110: Wegmesssystem
- 111: Wegmesssystem
- 112, 113: Regeleinheit
- 114, 115: Fluidleitung
- 116, 117: Hydraulisch-mechanisches Wandlerelement
- 116K, 117K: Bidirektional auslenkbarer Kolben
- 118, 119: Einstellbare Steifigkeit
- 120: Weitere Struktur
- 121, 122: Aktor
- 123: Entkopplungseinheit
- 124: Steifigkeit

## Patentansprüche

1. Vorrichtung zur bidirektionalen Lagerung einer ersten Struktur (100) relativ zu einer zweiten Struktur (101) längs einer ersten Raumachse (A1), mit einem beide Strukturen (100, 101) miteinander verbindenden bidirektional auslenkbaren Lager, **dadurch gekennzeichnet,**
a) **dass** das Lager wenigstens zwei Wandlerelemente (W1, W1 `) umfasst, die längs der ersten Raumachse (A1) an zwei sich gegenüberliegenden Seiten der ersten Struktur (100) angeordnet sind und diese mit der zweiten Struktur (101) verbinden,
b) **dass** die Wandlerelemente (W1, W1') jeweils eine mit einem Fluid befüllbare Fluidkammer (1) aufweisen und
b1) einen in die oder aus der Fluidkammer (1) gerichteten Fluidvolumenstrom oder eine auf das Wandlerelement (W1, W1') gerichtete Druckänderung in eine längs der ersten Raumachse (A1) orientierte Bewegung und/oder Kraft umzusetzen vermögen oder
b2) eine längs der ersten Raumachse (A1) auf das Wandlerelement (W1, W1') wirkende Kraft in einen in die oder aus der Fluidkammer (1) gerichteten Fluidvolumenstrom oder eine Druckänderung innerhalb der Fluidkammer (1) umzusetzen vermögen,
c) **dass** längs einer zur ersten Raumachse (A1) orthogonalen zweiten Raumachse (A2) zwei weitere Wandlerelemente (W2, W2') angeordnet sind, die längs der zweiten Raumachse (A2) an zwei sich gegenüberliegenden Seiten der ersten Struktur (100) angeordnet sind und diese mit der zweiten Struktur (101) verbinden,
d) **dass** die zwei weiteren Wandlerelemente (W2, W2') jeweils eine mit einem Fluid befüllbare Fluidkammer (1) aufweisen und
d1) einen in die oder aus der Fluidkammer (1) gerichteten Fluidvolumenstrom oder eine auf das Wandlerelement (W2, W2') gerichtete Druckänderung in eine längs der zweiten Raumachse (A2) orientierte Bewegung und/oder Kraft umzusetzen vermögen oder
d2) eine längs der zweiten Raumachse (A2) auf das Wandlerelement (W2, W2') wirkende Kraft in einen in die oder aus der Fluidkammer (1) gerichteten Fluidvolumenstrom oder eine Druckänderung innerhalb der Fluidkammer (1) umzusetzen vermögen, und
e) **dass** jeweils die Fluidkammer (1) der wenigstens zwei (W1, W1') und der zwei weiteren Wandlerelemente (W2, W2') eine ein Kammervolumen (5) um eine Längsrichtung (7) vollumfänglich umfassende Fluidkammerwand (4) sowie in Längsrichtung (7) eine Abfolge von wenigstens zwei Fluidkammerquerschnitten (q1, q2) aufweist, nämlich einen ersten und einen zweiten Fluidkammerquerschnitt, die beide unterschiedlich groß dimensioniert und elastisch zueinander gelagert sind, wobei die Fluidkammerwand innerhalb des ersten und zweiten Fluidkammerquerschnittes (q1, q2) jeweils ein Wandmaterial aufweist, das aus einem formstabilen Material besteht, und die Fluidkammerwand im übrigen Wandbereich elastisch verformbar ist, und
f) **dass** die wenigstens zwei und zwei weiteren Wandlerelemente (W1, W1', W2, W2') jeweils mit ihrer Längsrichtung (7) längs jeweils einer der Raumachsen (A1, A2) angeordnet sind.

2. Vorrichtung nach Anspruch 1,
**dadurch gekennzeichnet,**
a) **dass** längs einer zur ersten und zweiten Raumachse (A1, A2) orthogonalen dritten Raumachse zwei weitere Wandlerelemente angeordnet sind, die längs der dritten Raumachse an zwei sich gegenüberliegenden Seiten der ersten Struktur (100) angeordnet sind und diese mit der zweiten Struktur (101) verbinden,
b) **dass** die zwei weiteren Wandlerelemente jeweils eine mit einem Fluid befüllbare Fluidkammer aufweisen und
b1) einen in die oder aus der Fluidkammer gerichteten Fluidvolumenstrom oder eine auf das Wandlerelement gerichtete Druckänderung in eine längs der dritten Raumachse orientierte Bewegung und/oder Kraft umzusetzen vermögen oder
b2) eine längs der dritten Raumachse auf das Wandlerelement wirkende Kraft in einen in die oder aus der Fluidkammer gerichteten Fluidvolumenstrom oder eine Druckänderung innerhalb der Fluidkammer umzusetzen vermögen.

3. Vorrichtung zur bidirektionalen Lagerung einer ersten Struktur (100) relativ zu einer zweiten Struktur (101) längs wenigstens einer ersten Raumachse (A1), mit einem beide Strukturen (100, 101) miteinander verbindenden, bidirektional auslenkbaren Lager,
**dadurch gekennzeichnet,**
a) **dass** das Lager wenigstens zwei Wandlerelemente (W1, W2) umfasst, von denen ein erstes Wandlerelement (W1) die erste Struktur (100) längs der ersten Raumachse (A1) auslenkbar mit der zweiten Struktur (101) verbindet und von denen ein zweites Wandlerelement (W2) die erste Struktur (100) längs einer zur ersten Raumachse (A1) orthogonalen zweiten Raumachse (A2) auslenkbar mit der zweiten Struktur (101) verbindet, und
b) **dass** die Wandlerelemente (W1, W2) jeweils eine mit einem Fluid befüllbare Fluidkammer (1) aufweisen und
b1) einen in die oder aus der Fluidkammer (1) gerichteten Fluidvolumenstrom oder eine auf das Wandlerelement (W1, W2) gerichtete Druckänderung in eine längs der Raumachse (A1, A2), längs der das jeweilige Wandlerelement (W1, W2) auslenkbar ist, orientierte Bewegung und/oder Kraft umzusetzen vermag oder
b2) eine längs der Raumachse (A1, A2), längs der das jeweilige Wandlerelement (W1, W2) auslenkbar ist, auf das Wandlerelement (W1, W2) wirkende Kraft in einen in die oder aus der Fluidkammer (1) gerichteten Fluidvolumenstrom oder eine Druckänderung innerhalb der Fluidkammer (1) umzusetzen vermag, und
c) **dass** jeweils die Fluidkammer (1) der wenigstens zwei Wandlerelemente (W1, W2) eine ein Kammervolumen (5) um eine Längsrichtung (7) vollumfänglich umfassende Fluidkammerwand (4) sowie in Längsrichtung (7) eine Abfolge von wenigstens zwei Fluidkammerquerschnitten (q1, q2) aufweist, nämlich einen ersten und einen zweiten Fluidkammerquerschnitt, die beide unterschiedlich groß dimensioniert und elastisch zueinander gelagert sind, wobei die Fluidkammerwand (7) innerhalb des ersten und zweiten Fluidkammerquerschnittes (q1, a2) jeweils ein Wandmaterial aufweist, das aus einem formstabilen Material besteht, und die Fluidkammerwand (4) im übrigen Wandbereich elastisch verformbar ist, und
d) **dass** die wenigstens zwei Wandlerelemente (W1, W2) jeweils mit ihrer Längsrichtung (7) längs jeweils einer der Raumachsen (A1, A2) angeordnet sind.

4. Vorrichtung nach Anspruch 1 oder 3,
**dadurch gekennzeichnet,**
a) **dass** längs einer zur ersten und zweiten Raumachse (A1, A2) orthogonalen dritten Raumachse (A3) wenigstens ein drittes Wandlerelement angeordnet ist, das längs der dritten Raumachse die erste Struktur mit der zweiten Struktur auslenkbar verbindet,
b) **dass** das dritte Wandlerelement jeweils eine mit einem Fluid befüllbare Fluidkammer aufweist und
b1) einen in die oder aus der Fluidkammer gerichteten Fluidvolumenstrom in eine längs der dritten Raumachse orientierte Bewegung und/oder Kraft umzusetzen vermag oder
b2) eine längs der dritten Raumachse auf das dritte Wandlerelement wirkende Kraft in einen in die oder aus der Fluidkammer gerichteten Fluidvolumenstrom umzusetzen vermag.

5. Vorrichtung nach Anspruch 3 oder 4,
**dadurch gekennzeichnet, dass** eine der Raumachsen (A1, A2, A3) derart orientiert ist, dass längs der einen Raumachse (A1, A2, A3) die Gravitationskraft parallel orientiert ist.

6. Vorrichtung nach einem der Ansprüche 3 bis 5,
**dadurch gekennzeichnet, dass** längs wenigstens einer der Raumrichtungen ein Mittel (102, 103) angeordnet ist, durch das eine längs der wenigstens einen Raumrichtung (A1, A2) zwischen der ersten und zweiten Struktur (100, 101) wirkende Rückstellkraft erzeugbar ist, die dem längs der wenigstens einen Raumrichtung (A1, A2, A3) zwischen der ersten und zweiten Struktur (100, 101) angeordneten Wandlerelement entgegenwirkt.

7. Vorrichtung nach einem der Ansprüche 1 bis 6,
**dadurch gekennzeichnet, dass** jeweils die Fluidkammer (1) der Wandlerelemente mit einer Fluidleitung (6) verbunden ist, längs der ein Absperrelement (105) angebracht ist, das aus einer geöffneten Stellung, in der Fluid in die oder aus der Fluidkammer strömt, in eine geschlossene Stellung, in der die Fluidkammer fluiddicht abgeschlossen ist, und umgekehrt überführbar ist.

8. Vorrichtung nach Anspruch 7,
**dadurch gekennzeichnet, dass** das Absperrelement (105) als Drossel ausgebildet ist, und
dass die Drossel einen variabel einstellbaren Drosselquerschnitt besitzt, durch den das Fluid strömt.

9. Vorrichtung nach einem der Ansprüche 1 bis 7,
**dadurch gekennzeichnet, dass** wenigstens zwei längs einer Raumachse angeordnete Wandlerelemente über eine Fluidleitung miteinander verbunden sind.

10. Vorrichtung nach einem der Ansprüche 7 bis 9,
**dadurch gekennzeichnet, dass** längs wenigstens einer Fluidleitung (106) eine steuerbare oder regelbare Fluidförderpumpe (109) angeordnet ist.

11. Vorrichtung nach Anspruch 10,
**dadurch gekennzeichnet, dass** an wenigstens einem der mit der Fluidleitung (106) verbundenen Wandlerelemente ein Wegmesssensor (110, 111) angebracht ist.

12. Vorrichtung nach einem der Ansprüche 7 bis 10,
**dadurch gekennzeichnet, dass** in der Fluidleitung (106) ein hydraulisch-mechanisches Wandlerelement (116, 117) eingebracht ist, mit einem mechanischen Ausgang, der mit einer einstellbaren Steifigkeit oder einem regelbaren Aktor (121, 122) verbunden ist, die bzw. der sich an einem raumfesten Gegenlager (120) abstützt.

13. Vorrichtung nach Anspruch 12,
**dadurch gekennzeichnet, dass** zwischen dem raumfesten Gegenlager (120) und dem mechanischen Ausgang des hydraulisch-mechanischen Wandlerelementes (116, 117) der regelbare Aktor (121, 122) in Serie mit einer Entkopplungseinheit (123) und parallel zum regelbaren Aktor (121, 122) und der Entkopplungseinheit (123) eine Steifigkeit (124) geschaltet sind.

14. Vorrichtung nach Anspruch 13,
**dadurch gekennzeichnet, dass** das raumfeste Gegenlager die zweite Struktur (120) ist.

15. Vorrichtung nach einem der Ansprüche 1 bis 14,
**dadurch gekennzeichnet, dass** das Wandlerelemente jeweils identisch ausgebildet sind.

16. Vorrichtung nach einem der Ansprüche 1 bis 15,
**dadurch gekennzeichnet, dass** die Fluidkammerwand (4) in Längsrichtung eine Abfolge von wenigstens drei Fluidkammerquerschnitten (q1, q2, q3) aufweist, nämlich den Ersten und Zweiten sowie einen dritten Fluidkammerquerschnitt, von denen der zweite Fluidkammerquerschnitt in Längsrichtung zwischen dem Ersten und Dritten angeordnet ist und kleiner oder größer ist als jeweils der Erste und Dritte, und
dass die Fluidkammerwand innerhalb des ersten, zweiten und dritten Fluidkammerquerschnittes (q1, q2, q3) ein Wandmaterial aufweist, das aus einem formstabilen Material besteht, und
dass die Fluidkammerwand (4) im übrigen Wandbereich elastisch verformbar ist.

17. Vorrichtung nach einem der Ansprüche 1 bis 16,
**dadurch gekennzeichnet, dass** der wenigstens erste und zweite Fluidkammerquerschnitt (q1, q2) in Längsrichtung beabstandet sind und über einen elastischen Fluidkammerwandabschnitt miteinander verbunden sind.

18. Vorrichtung nach Anspruch 7,
**dadurch gekennzeichnet, dass** die Fluidkammer (1) einen Kammerboden (2) und einen Kammerdeckel (3) besitzt, die zusammen mit der Fluidkammerwand (4) das Kammervolumen (5) fluiddicht begrenzen, und
dass in die Fluidkammer (1) wenigstens die absperrbare Fluidleitung (6) mündet.

19. Vorrichtung nach einem der Ansprüche 1 bis 18,
**dadurch gekennzeichnet, dass** das aus einem formstabilen Material bestehende Wandmaterial in Form einer Ringstruktur (9) ausgebildet ist, mit einer den jeweiligen Fluidkammerquerschnitt kreisförmig umgebenden oder mit einer von der Kreisform abweichenden, in sich geschlossenen Ringform, die eine in Längsrichtung orientierte Ringbreite besitzt.

20. Vorrichtung nach Anspruch 17,
**dadurch gekennzeichnet, dass** in Längsrichtung (7) zwischen den Ringstrukturen (9) jeweils ein aus elastomeren Material bestehender Wandabschnitt angebracht.

21. Vorrichtung nach einem der Ansprüche 1 bis 20,
**dadurch gekennzeichnet, dass** das aus formstabilen Material bestehende Wandmaterial Metall oder ein formstabiler Kunststoff oder ein faserverstärkter Kunststoff oder wenigstens ein Materialzusatz innerhalb eines elastomeren Materials ist.

22. Vorrichtung nach einem der Ansprüche 16 bis 18,
**dadurch gekennzeichnet, dass** die Fluidkammerwand (4) aus elastomeren Material gefertigt ist, und dass die Ringstrukturen (9) in das elastomere Material eingebettet sind.

23. Vorrichtung nach einem der Ansprüche 16 bis 22,
**dadurch gekennzeichnet, dass** die Fluidkammerwand (4) eine Vielzahl von ersten, zweiten und dritten, jeweils von Ringstrukturen umfasste Fluidkammerquerschnitten in Längsrichtung aufweist.

24. Vorrichtung nach Anspruch 16,
**dadurch gekennzeichnet, dass** der erste und dritte Fluidkammerquerschnitt gleich groß dimensioniert sind.

25. Vorrichtung nach Anspruch 16 und 24,
**dadurch gekennzeichnet, dass** die Fluidkammerwand (4) aus wenigstens zwei baugleichen Modulkomponenten (11, 12) zusammengesetzt ist, wobei jeweils eine Modulkomponente zwei unterschiedlich groß dimensionierte Ringstrukturen aufweist, die über einen elastomeren Zwischenwandabschnitt miteinander verbunden sind, und
dass jeweils zwei gleichdimensionierte Ringstrukturen beider Modulkomponenten unter Ausbildung einer Fluidkammerkammerwand mit den drei Fluidkammerquerschnitten zusammengefügt sind.

26. Vorrichtung nach Anspruch 16,
**dadurch gekennzeichnet, dass** der erste und dritte Fluidkammerquerschnitt (q1, q3) unterschiedlich groß sind.

27. Verwendung der Vorrichtung nach einem der Ansprüche 1 bis 26 zur wenigstens ein-achsigen passiven oder aktiven Lagerung oder Positionierung der ersten Struktur relativ zur zweiten Struktur.

28. Verwendung der Vorrichtung nach einem der Ansprüche 12 bis 26 zur wenigstens ein-axialen passiven oder aktiven Lagerung der ersten Struktur relativ zur zweiten Struktur mit einer semiaktiven oder aktiven Anbindungsimpedanz.

## Claims

1. Device for bidirectional arrangement of a first structure (100) relative to a second structure (101) along a first spatial axis (A1), with a bidirectionally deflectable support which connects the two structures (100, 101) to each other,
**characterized in that**
a) the support comprises at least two transducer elements (W1, W1') which are arranged along the first spatial axis (A1) on two opposite sides of the first structure (100) and connect it to the second structure (101),
b) each of the transducer elements (W1, W1') has a fluid chamber (1) that can be filled with a fluid, and
b1) is able to convert a fluid volume flow directed into or out of the fluid chamber (1) or a pressure change directed at the transducer element (W1, W1') into a motion and/or force aligned along the first spatial axis (A1), or
b2) is able to convert a force acting along the first spatial axis (A1) on the transducer element (W1, W1') into a fluid volume flow directed into or out of the fluid chamber (1) or a pressure change within the fluid chamber (1),
c) two further transducer elements (W2, W2') are arranged along a second spatial axis (A2) orthogonal to the first spatial axis (A1), and are arranged along the second spatial axis (A2) on two opposite sides of the first structure (100) and connect it to the second structure (101),
d) the two further transducer elements (W2, W2') each have a fluid chamber (1) that can be filled with a fluid, and
d1) is able to convert a fluid volume flow directed into or out of the fluid chamber (1) or a pressure change directed at the transducer element (W2, W2') into a motion and/or force aligned along the second spatial axis (A2), or
d2) is able to convert a force acting along the second spatial axis (A2) on the transducer element (W2, W2') into a fluid volume flow directed into or out of the fluid chamber (1) or a pressure change within the fluid chamber (1), and
e) each fluid chamber (1) of the at least two (W1, W1') and of the at least two further (W2, W2') transducer elements has a fluid chamber wall (4) that completely surrounds a chamber volume (5) around a longitudinal direction (7), and a series of at least two fluid chamber cross-sections (q1, q2) in the longitudinal direction (7), namely a first and a second fluid chamber cross-section, both of which are differently dimensioned from each other and are supported elastically with respect to each other, wherein the fluid chamber wall includes a wall material made from a dimensionally stable material inside each of the first and second fluid chamber cross-sections (q1, q2), and the fluid chamber wall is elastically deformable in the rest of the wall region, and
f) the at least two and two further transducer elements (W1, W1', W2, W2') are each arranged with their longitudinal direction (7) along one of the spatial axes (A1, A2).

2. Device according to Claim 1,
**characterized in that**
a) two further transducer elements are arranged along a third spatial axis orthogonal to the first and second spatial axes (A1, A2), and are arranged along the third spatial axis on two opposite sides of the first structure (100) and connect it to the second structure (101),
b) each of the two further transducer elements has a fluid chamber which can be filled with a fluid, and
b1) is able to convert a fluid volume flow directed into or out of the fluid chamber or a pressure change directed at the transducer element into a motion and/or force aligned along the third spatial axis, or
b2) is able to convert a force acting along the third spatial axis on the transducer element into a fluid volume flow directed into or out of the fluid chamber or a pressure change within the fluid chamber.

3. Device for bidirectional arrangement of a first structure (100) relative to a second structure (101) along at least a first spatial axis (A1), with a bidirectionally deflectable support which connects the two structures (100, 101) to each other,
**characterized in that**
a) the support comprises at least two transducer elements (W1, W2), of which a first transducer element (W1) connects the first structure (100) deflectably to the second structure (101) along the first spatial axis (A1), and of which a second transducer element (W2) connects the first structure (100) deflectably to the second structure (101) along a second spatial axis (A2) orthogonal to the first spatial axis (A1), and
b) each of the transducer elements (W1, W2) has a fluid chamber (1) that can be filled with a fluid, and
b1) is able to convert a fluid volume flow directed into or out of the fluid chamber (1) or a pressure change directed at the transducer element (W1, W2) into a motion and/or force aligned along the spatial axis (A1, A2) along which the respective transducer element (W1, W2) is deflectable, or
b2) is able to convert a force acting on the transducer element (W1, W2) along the spatial axis (A1, A2) along which the respective transducer element (W1, W2) is deflectable into a fluid volume flow directed into or out of the fluid chamber (1) or a pressure change within the fluid chamber (1), and
c) each fluid chamber (1) of the at least two transducer elements (W1, W2) has a fluid chamber wall (4) that completely surrounds a chamber volume (5) around a longitudinal direction (7), and a series of at least two fluid chamber cross-sections (q1, q2) in the longitudinal direction (7), namely a first and a second fluid chamber cross-section, both of which are differently dimensioned from each other and are supported elastically with respect to each other, wherein the fluid chamber wall includes a wall material made from a dimensionally stable material inside each of the first and second fluid chamber cross-sections (q1, q2), and the fluid chamber wall (4) is elastically deformable in the rest of the wall region, and
d) the at least two further transducer elements (W1, W2) are each arranged with their longitudinal direction (7) along One of the spatial axes (A1, A2) .

4. Device according to Claim 1 or 3,
**characterized in that**
a) at least a third transducer element is arranged along a third spatial axis (A3) orthogonal to the first and second spatial axes (A1, A2), and connects the first structure to the second structure deflectably along the third spatial axis,
b) each third transducer element has a fluid chamber that can be filled with a fluid, and
b1) is able to convert a fluid volume flow into or out of the fluid chamber into a motion and/or force aligned along the third spatial axis, or
b2) is able to convert a force acting on the third transducer element along the third spatial axis into a fluid volume flow into or out of the fluid chamber.

5. Device according to Claim 3 or 4, **characterized in that** one of the spatial axes (A1, A2, A3) is orientated in such manner that the force of gravity is orientated parallel to the one spatial axis (A1, A2, A3).

6. Device according to any one of Claims 3 to 5, **characterized in that** a means (102, 103) is arranged along at least one of the spatial directions, by which a restoring force can be generated, acting along the at least one spatial direction (A1, A2) between the first and the second structure (100, 101), which force counteracts the transducer element arranged between the first and the second structure (100, 101) along the at least one spatial direction (A1, A2, A3).

7. Device according to any one of Claims 1 to 6, **characterized in that** each fluid chamber (1) of the transducer elements is connected to a fluid line (6), along which a shut-off element (105) is attached, which can be switched from an open position, in which fluid flows into or out of the fluid chamber, to a closed position, in which the fluid chamber is closed in fluid-tight manner, and back again.

8. Device according to Claim 7, **characterized in that** the shut-off element (105) is designed as a throttle valve, and the throttle valve has a variably adjustable throttle cross-section, through which the fluid flows.

9. Device according to any one of Claims 1 to 7, **characterized in that** at least two transducer elements arranged along a spatial axis are connected to each other via a fluid line.

10. Device according to any one of Claims 7 to 9, **characterized in that** a manually or automatically controllable fluid feed pump (109) is arranged along at least one fluid line (106).

11. Device according to Claim 10, **characterized in that** a displacement sensor (110, 111) is attached to at least one of the transducer elements connected to the fluid line (106).

12. Device according to any one of Claims 7 to 10, **characterized in that** a hydraulic-mechanical transducer element (116, 117) is installed in the fluid line (106), with a mechanical output that is connected to an adjustable stiffener or a controllable actuator (121, 122), and/or which is braced against a rigid counter bearing (120).

13. Device according to Claim 12, **characterized in that** the controllable actuator (121, 122) is connected in series to a decoupling unit (123), and a stiffener (124) is connected in parallel to the controllable actuator (121, 122) and the decoupling unit (123) between the rigid counter bearing (120) and the mechanical output of the hydraulic-mechanical transducer element (116, 117) .

14. Device according to Claim 13, **characterized in that** the rigid counter bearing is the second structure (120).

15. Device according to any one of Claims 1 to 14, **characterized in that** the transducer elements are each identical with each other.

16. Device according to any one of Claims 1 to 15, **characterized in that** the fluid chamber wall (4) has in its longitudinal direction a sequence of at least three fluid chamber cross-sections (q1, q2, q3), namely the first and second as well as a third fluid chamber cross-section, of which the second fluid chamber cross-section is arranged between the first and the third in the longitudinal direction, and is smaller or larger than the first or the third respectively, and the fluid chamber wall includes a wall material within the first, second and third fluid chamber cross section (q1, q2, q3) that consists of a dimensionally stable material, and the fluid chamber wall (4) is elastically deformable on the rest of the wall region.

17. Device according to any one of Claims 1 to 16, **characterized in that** the at least first and second fluid chamber cross-section (q1, q2) are located at a distance from each other in the longitudinal direction, and are connected to each other via an elastic fluid chamber wall section.

18. Device according to Claim 7, **characterized in that** the fluid chamber (1) has a chamber base (2) and a chamber cover (3), which together with the fluid chamber wall (4) delimit the chamber volume (5) in fluid-tight manner, and at least the closable fluid line (6) opens into the fluid chamber (1).

19. Device according to any one of Claims 1 to 18, **characterized in that** the wall material made from a dimensionally stable material is constructed in the form of a ring structure (9), with an annular shape that surrounds the respective fluid chamber cross-section in circular fashion, or with a closed annular shape that differs from the circular shape, which has a ring width orientated in the longitudinal direction.

20. Device according to Claim 17, **characterized in that** a wall section consisting of elastomeric material is inserted in the longitudinal direction (7) between each of the ring structures (9).

21. Device according to any one of Claims 1 to 20, **characterized in that** the wall material consisting of dimensionally stable material is metal or a dimensionally stable plastic or fibre-reinforced plastic, or at least a material additive inside an elastomeric material.

22. Device according to any one of Claims 16 to 18, **characterized in that** the fluid chamber wall (4) is made from elastomeric material, and the ring structures (9) are embedded in the elastomeric material.

23. Device according to any one of Claims 16 to 22, **characterized in that** the fluid chamber wall (4) includes a multiplicity of first, second and third fluid chamber cross-sections in the longitudinal direction, each surrounded by ring structures.

24. Device according to Claim 16, **characterized in that** the first and the third fluid chamber cross-sections are dimensioned identically.

25. Device according to Claims 16 and 24, **characterized in that** the fluid chamber wall (4) is assembled from at least two module components (11, 12) of identical construction, wherein each module component includes two differently dimensioned ring structures, which are connected to each other via an elastomeric intermediate wall section, and two identically dimensioned ring structures from each of the two module components as joined with the three fluid chamber cross-sections, thereby forming a fluid chamber wall.

26. Device according to Claim 16, **characterized in that** the first and third fluid chamber cross-sections are of different sizes.

27. Use of the device according to any one of Claims 1 to 26 for at least monoaxial, passive or active support or positioning of the first structure relative to the second structure.

28. Use of the device according to any one of Claims 12 to 26 for at least monoaxial, passive or active support of the first structure relative to the second structure with a semi-active or active linkage impedance.

## Revendications

1. Dispositif de montage bidirectionnel d'une première structure (100) par rapport à une deuxième structure (101) le long d'un premier axe spatial (A1), comportant un palier bidirectionnel déviable reliant les deux structures (100, 101) l'une à l'autre, **caractérisé en ce que**
a) le palier comprend au moins deux éléments transducteurs (W1, W1'), qui sont disposés le long du premier axe spatial (A1) sur deux côtés opposés de la première structure (100) et les relient à la deuxième structure (101),
b) les éléments transducteurs (W1, W1') présentent respectivement une chambre à fluide (1) qui peut être remplie par un fluide et
b1) permettent de convertir un débit volumique de fluide dirigé vers ou hors de la chambre à fluide (1) ou une variation de pression dirigée vers l'élément transducteur (W1, W1') en un mouvement et/ou une force dirigé le long du premier axe spatial (A1) ou
b2) permettent de convertir la force agissant le long du premier axe spatial (A1) sur l'élément transducteur (W1, W1') en un débit volumique de fluide dirigé vers ou hors de la chambre à fluide (1) ou une variation de pression à l'intérieur de la chambre à fluide (1),
c) que le long d'un deuxième axe spatial (A2) orthogonal au premier axe spatial (A1), deux autres éléments transducteurs (W2, W2') sont disposés, qui sont disposés le long du deuxième axe spatial (A2) sur deux côtés opposés de la première structure (100) et les relient à la deuxième structure (101),
d) que les deux autres éléments transducteurs (W2, W2') présentent respectivement une chambre à fluide (1) qui peut être remplie d'un fluide et
d1) permettent de convertir un débit volumique de fluide dirigé vers ou hors de la chambre à fluide (1) ou une variation de pression dirigée vers l'élément transducteur (W2, W2') en un mouvement et/ou une force dirigés le long du deuxième axe spatial (A2) ou
d2) permettent de convertir la force agissant le long du deuxième axe spatial (A2) sur l'élément transducteur (W2, W2') en un débit volumique de fluide dirigé vers ou hors de la chambre à fluide (1) ou une variation de pression à l'intérieur de la chambre à fluide (1),
e) que respectivement la chambre à fluide (1) des au moins deux (W1, W1') et des deux autres éléments transducteurs (W2, W2') présente une paroi de chambre à fluide (4) qui englobe complètement un volume de chambre (5) autour d'une direction longitudinale (7) et dans la direction longitudinale (7) une succession d'au moins deux sections transversales de chambre à fluide (q1, q2), à savoir une première et une deuxième section transversale de chambre à fluide, qui ont toutes deux des dimensions différentes et sont montées élastiquement l'une sur l'autre, dans lequel la paroi de chambre à fluide à l'intérieur de la première et de la deuxième section transversale de chambre à fluide (q1, q2) présente respectivement un matériau de paroi qui se compose d'un matériau dimensionnellement stable, et la paroi de la chambre à fluide est élastiquement déformable dans la zone de paroi restante, et
f) les au moins deux et deux autres éléments transducteurs (W1, W1', W2, W2') sont disposés respectivement avec leur direction longitudinale (7) suivant l'un des axes spatiaux (A1, A2).

2. Dispositif selon la revendication 1, **caractérisé en ce que**
a) le long d'un troisième axe spatial orthogonal au premier et au deuxième axe spatial (A1, A2) sont disposés deux autres éléments transducteurs, qui sont disposés sur deux côtés opposés de la première structure (100) et les relient à la deuxième structure (101),
b) les deux autres éléments transducteurs présentent respectivement une chambre à fluide pouvant être remplie d'un fluide et
b1) permettent de convertir un débit volumique de fluide dirigé vers ou hors de la chambre à fluide ou une variation de pression dirigée sur l'élément transducteur en un mouvement et/ou une force dirigés le long du troisième axe spatial, ou
b2) permettent de convertir une force agissant le long du troisième axe spatial sur l'élément transducteur en un débit volumique de fluide ou une variation de pression dirigée vers ou hors de la chambre à fluide à l'intérieur de la chambre à fluide.

3. Dispositif de montage bidirectionnel d'une première structure (100) par rapport à une deuxième structure (101) le long d'au moins un premier axe spatial (A1), comportant un palier bidirectionnel déviable reliant les deux structures (100, 101) l'une à l'autre, **caractérisé en ce que**
a) le palier comprend au moins deux éléments transducteurs (W1, W2), dont un premier élément transducteur (W1) relie la première structure (100) à la deuxième structure (101) de manière déviable le long du premier axe spatial (A1) et dont un deuxième élément transducteur (W2) relie la première structure (100) à la deuxième structure (101) de manière déviable le long d'un deuxième axe spatial (A2) orthogonal au premier axe spatial (A1), et
b) les éléments transducteurs (W1, W2) présentent respectivement une chambre à fluide (1) pouvant être remplie d'un fluide et
b1) permet de convertir un débit volumique de fluide dirigé vers ou hors de la chambre à fluide (1) ou une variation de pression dirigée vers l'élément transducteur (W1, W2) en un mouvement et/ou une force dirigé le long du premier axe spatial (A1, A2), déviable le long de l'élément transducteur respectif (W1, W2) ou
b2) permet de convertir une force agissant le long de l'axe spatial (A1, A2) sur l'élément transducteur (W1, W2), déviable le long de l'élément transducteur respectif (W1, W2) en un débit volumique de fluide dirigé vers ou hors de la chambre à fluide (1) ou une variation de pression à l'intérieur de la chambre à fluide (1),
c) la chambre à fluide (1) des au moins deux éléments transducteurs (W1, W2) présente une paroi de chambre à fluide (4) qui entoure complètement un volume de chambre (5) autour d'une direction longitudinale (7) et une succession d'au moins deux sections transversales de chambre à fluide (q1, q2) dans la direction longitudinale (7), à savoir une première et une deuxième section transversale de chambre à fluide, qui ont toutes deux des dimensions différentes et sont montées élastiquement l'une sur l'autre, dans lequel la paroi de chambre à fluide (7) à l'intérieur de la première et la deuxième section transversale de chambre à fluide (q1, q2) présente respectivement un matériau de paroi constitué d'un matériau dimensionnellement stable, et la paroi de chambre à fluide (4) est élastiquement déformable dans la zone de paroi restante, et
d) les au moins deux éléments transducteurs (W1, W2) sont disposés respectivement avec leur direction longitudinale (7) le long d'un des axes spatiaux (A1, A2).

4. Dispositif selon la revendication 1 ou 3, **caractérisé en ce que**
a) au moins un troisième élément transducteur est disposé le long d'un troisième axe spatial (A3) orthogonal aux premier et deuxième axes spatiaux (A1 A2) et relie la première structure à la deuxième structure de manière déviable le long du troisième axe spatial,
b) le troisième élément transducteur présente respectivement une chambre à fluide pouvant être remplie d'un fluide et
b1) permet de convertir un débit volumique de fluide dirigé vers ou hors de la chambre à fluide en un mouvement et/ou une force dirigés le long du troisième axe spatial ou
b2) permet de convertir une force agissant le long du troisième axe spatial sur le troisième élément transducteur en un débit volumique de fluide dirigé vers ou hors de la chambre à fluide.

5. Dispositif selon la revendication 3 ou 4, **caractérisé en ce que** un des axes spatiaux (A1, A2, A3) est dirigé de manière à ce que la force de gravitation soit dirigée parallèlement le long d'un des axes spatiaux (A1, A2, A3).

6. Dispositif selon une des revendications 3 à 5, **caractérisé en ce que** le long d'au moins une des directions spatiales des moyens (102, 103) sont disposés, au moyen desquels une force de rappel agissant le long d'au moins une direction spatiale (A1, A2) entre la première et la deuxième structure (100, 101) peut être générée, qui contrecarre celle de l'élément transducteur disposé le long d'au moins une direction spatiale (A1, A2, A3) entre la première et la deuxième structure (100, 101).

7. Dispositif selon une des revendications 1 à 6, **caractérisé en ce que** respectivement la chambre à fluide (1) des éléments transducteurs est reliée à une conduite de fluide (6), le long de laquelle un élément d'obturation (105) est fixé, qui peut être passé d'une position ouverte, dans laquelle le fluide s'écoule dans ou hors de la chambre à fluide, à une position fermée, dans laquelle la chambre à fluide est hermétiquement fermée, et vice versa.

8. Dispositif selon la revendication 7, **caractérisé en ce que** l'élément d'obturation (105) est réalisé sous la forme d'un étranglement et **en ce que** l'étranglement présente une section d'étranglement réglable de manière variable à travers laquelle s'écoule le fluide.

9. Dispositif selon une des revendications 1 à 7, **caractérisé en ce qu'**au moins deux éléments transducteurs disposés le long d'un axe spatial sont reliés l'un à l'autre par une conduite de fluide.

10. Dispositif selon une des revendications 7 à 9, **caractérisé en ce que** le long d'au moins une conduite de fluide (106) est disposée une pompe d'alimentation en fluide pilotable ou réglable (109).

11. Dispositif selon la revendication 10, **caractérisé en ce que** sur au moins un des éléments transducteurs relié à la conduite de fluide (106) est monté un capteur de déplacement (110, 111).

12. Dispositif selon une des revendications 7 à 10, **caractérisé en ce qu'**un élément transducteur hydraulique-mécanique (116, 117) est monté dans la ligne de fluide (106), comportant une sortie mécanique, qui est reliée avec un actionneur réglable (121, 122) ou une rigidité réglable, qui s'appuie sur un contre-palier (120) stationnaire.

13. Dispositif selon la revendication 12, **caractérisé en ce qu'**entre le contre-palier stationnaire (120) et la sortie mécanique de l'élément transducteur hydraulique-mécanique (116, 117), l'actionneur commandable (121, 122) est raccordé en série avec une unité de découplage (123) et une rigidité (124) est raccordée en parallèle à l'actionneur commandable (121, 122) et l'unité de découplage (123).

14. Dispositif selon la revendication 13, **caractérisé en ce que** le contre-palier stationnaire est la deuxième structure (120).

15. Dispositif selon une des revendications 1 à 14, **caractérisé en ce que** les éléments transducteurs sont formés respectivement de manière identique.

16. Dispositif selon une des revendications 1 à 15, **caractérisé en ce que** la paroi de chambre à fluide (4) présente une succession d'au moins trois sections transversales de chambre à fluide (q1, q2, q3) dans la direction longitudinale, à savoir la première et la deuxième ainsi qu'une troisième section transversale de chambre à fluide, dont la deuxième section transversale de chambre à fluide est disposée longitudinalement entre la première et la troisième et est plus petite ou plus grande que respectivement la première et la troisième et **en ce que** la paroi de la chambre à fluide présente à l'intérieur de la première, deuxième et troisième section transversale de la chambre à fluide (q1, q2, q3) un matériau de paroi, qui se compose d'un matériau dimensionnellement stable, et la paroi de la chambre à fluide (4) est élastiquement déformable dans la zone de paroi restante.

17. Dispositif selon une des revendications 1 à 16 **caractérisé en ce que** les au moins première et deuxième sections transversales de chambre à fluide (q1, q2) sont espacées dans la direction longitudinale et sont reliées l'une à l'autre par l'intermédiaire d'une section de paroi de chambre à fluide élastique.

18. Dispositif selon la revendication 7, **caractérisé en ce que** la chambre à fluide (1) comporte un fond de chambre (2) et un couvercle de chambre (3) qui, conjointement à la paroi de chambre à fluide (4), délimitent de manière étanche le volume de la chambre (5) et qu'au moins la conduite de fluide verrouillable (6) débouche dans la chambre à fluide (1).

19. Dispositif selon une des revendications 1 à 18, **caractérisé en ce que** le matériau de paroi constitué d'un matériau dimensionnellement stable est conçu sous la forme d'une structure annulaire (9), avec une forme circulaire entourant la section transversale respective de la chambre à fluide ou avec une forme annulaire fermée s'écartant de la forme circulaire, qui possède une largeur d'anneau orientée dans la direction longitudinale.

20. Dispositif selon la revendication 17, **caractérisé en ce que** un profilé de paroi en matériau élastomère est respectivement monté dans la direction longitudinale (7) entre les structures annulaires (9).

21. Dispositif selon une des revendications 1 à 20, **caractérisé en ce que** le matériau de paroi dimensionnellement stable est un métal ou plastique indéformable ou un plastique renforcé de fibres ou au moins un additif de matériau dans un matériau élastomère.

22. Dispositif selon une des revendications 16 à 18 **caractérisé en ce que** la paroi de la chambre à fluide (4) est en matériau élastomère et **en ce que** les structures annulaires (9) sont incorporées dans le matériau élastomère.

23. Dispositif selon une des revendications 16 à 22, **caractérisé en ce que** la paroi de chambre à fluide (4) présente une multiplicité de première, deuxième et troisième sections transversales de chambre à fluide entourées respectivement de structures annulaires dans la direction longitudinale.

24. Dispositif selon une quelconque des revendications 16 à 24, **caractérisé en ce que** les première et troisième sections de chambre fluidique sont de même dimension.

25. Dispositif selon les revendications 16 et 24, **caractérisé en ce que** la paroi de chambre à fluide (4) est composée d'au moins deux composants de module structurellement identiques (11, 12), dans lequel chaque composant de module présente deux structures annulaires de tailles différentes, qui sont reliées l'une à l' autre par une section de paroi intermédiaire en élastomère et que deux structures annulaires de dimensions égales des deux composants de module à fluide sont assemblées avec les trois sections transversales de la chambre à fluide en formant une paroi de chambre à fluide.

26. Dispositif selon la revendication 16, **caractérisé en ce que** la première et la troisième section de chambre à fluide (q1, q3) sont de tailles différentes.

27. Utilisation du dispositif selon une des revendications 1 à 26 pour au moins un montage passif ou actif uniaxial ou un positionnement de la première structure par rapport à la deuxième structure.

28. Utilisation du dispositif selon une des revendications 12 à 26 pour au moins un montage passif ou actif uniaxial de la première structure par rapport à la deuxième structure avec une impédance de connexion semi-active ou active.
